Europäisches Patentamt

European Patent Office

Office européen des brevets

(19)

(11) **EP 1 047 889 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.$^7$: **F16H 61/02**

(21) Anmeldenummer: **99959332.0**

(86) Internationale Anmeldenummer:
**PCT/EP99/09107**

(22) Anmeldetag: **25.11.1999**

(87) Internationale Veröffentlichungsnummer:
**WO 00/031442 (02.06.2000 Gazette 2000/22)**

(54) **VERFAHREN ZUR STEUERUNG EINES SCHALTVORGANGES IN AUTOMATIKGETRIEBEN**

METHOD FOR CONTROLLING A GEAR-CHANGE OPERATION IN AUTOMATIC TRANSMISSIONS

PROCEDE DE COMMANDE D'UN CHANGEMENT DE VITESSES DANS DES BOITES DE VITESSES AUTOMATIQUES

(84) Benannte Vertragsstaaten:
**AT BE CH CY DE DK ES FI FR GB GR IE IT LI LU MC NL PT SE**

(30) Priorität: **25.11.1998 DE 19854254**

(43) Veröffentlichungstag der Anmeldung:
**02.11.2000 Patentblatt 2000/44**

(73) Patentinhaber: **Voith Turbo GmbH & Co. KG**
**89522 Heidenheim (DE)**

(72) Erfinder:
• **KÖRNER, Tillmann**
**D-89551 Zang (DE)**
• **DIETZEL, Bernd**
**D-89428 Syrgenstein (DE)**

• **WILLMERDING, Günter**
**D-89168 Oberstotzinger (DE)**
• **TRÜBSWASSER, Franz**
**D-89518 Heidenheim (DE)**
• **HAECKH, Jakob**
**D-89567 Sontheim (DE)**
• **DEPPING, Herbert**
**D-89537 Giengen (DE)**

(74) Vertreter: **Dr. Weitzel & Partner**
**Friedenstrasse 10**
**89522 Heidenheim (DE)**

(56) Entgegenhaltungen:
WO-A1-98/34054          DE-A1- 19 516 948
DE-A1- 19 638 064          US-A- 5 063 510

**Beschreibung**

Die Erfindung betrifft ein Verfahren und eine Vorrichtung zur Steuerung von Schaltvorgängen in Automatikgetrieben für den Einsatz in Antriebssträngen von Fahrzeugen mit einem Antriebsmotor, insbesondere in Form einer Verbrennungskraftmaschine, im einzelnen mit den Maßnahmen der Ansprüche 1 bzw. 9.

Der gegenwärtige Trend in Fahrzeugen nach einem größerem Raumangebot, mehr Komfort, einem besseren Beschleunigungs- und Verzögerungsverhalten aus Gründen der Sicherheit bei allen Fahrzuständen sowie die zunehmende Bedeutung der Umweltschutzaspekte bedingt als Hauptanforderung an die Auslegung von Antriebssträngen in Fahrzeugen mit Verbrennungskraftmaschinen eine Verbesserung der Energiewandlung von der chemisch gebundenen Energie im Kraftstoff zu der an den Fahrzeugrädern erforderlichen mechanischen Antriebsenergie. Neben der Verbesserung der Einzelkomponenten liegt dabei der Schwerpunkt darauf, Möglichkeiten der Kraftstoffeinsparung durch Optimierung des Antriebsstranges durch Beurteilung des Gesamtsystems, speziell des Zusammenwirkens der Einzelkomponenten Motor und Getriebe zu erzielen. Dies erfordert eine optimale Anpassung der Getriebeübersetzung an das Kennfeld der Verbrennungskraftmaschine, auch als Motorkennfeld bezeichnet, um bei allen Fahrzuständen einen Betrieb des Fahrzeuges mit entsprechend günstigen Kraftstoffverbrauchswerten und optimalen Fahreigenschaften zu gewährleisten. Es ist bekannt, daß die Fahrleistung, der Kraftstoffverbrauch sowie die Lebensdauer des Antriebsstranges durch entsprechende Schaltprogramme von Automatikgetrieben erheblich beeinflußt werden können. Aus dem Stand der Technik sind eine Vielzahl unterschiedlicher Schaltprogramme bekannt, welche den unterschiedlichsten Anforderungen gerecht werden können. Dabei ist es das Ziel, eine Begrenzung des Arbeitsbereiches der Verbrennungskraftmaschine auf die wirtschaftlichen Betriebspunkte vorzunehmen. Im einfachsten Fall ist dies durch die Vorgabe fahrpedalstellungsabhängiger, fester Schaltdrehzahlen möglich. Dabei wird bisher aus Gründen der Einfachheit als Schaltdrehzahl die Ausgangsdrehzahl des Getriebes verwendet, die in jedem Gang einer bestimmten Motordrehzahl zugeordnet werden kann und die proportional der Fahrgeschwindigkeit ist. Wird dabei die obere Grenzdrehzahl überschritten, wird hochgeschaltet, wird die untere unterschritten, wird heruntergeschaltet. Im Fahrbetrieb wird dazu von der Getriebesteuerung ständig geprüft, ob für die aktuell gefahrene Laststufe im aktuellen Gang die Schaltdrehzahl erreicht oder überschritten wird. Wird diese Bedingung erfüllt, wird der Schaltvorgang vorgenommen. Da während eines vorzunehmenden Schaltvorganges jedoch auch Leistung übertragen wird, so daß die Möglichkeit einer weiteren Beschleunigung des Fahrzeuges während des Gangwechsels besteht, wird die sich einstellende Motordrehzahl nach dem Schaltvorgang sehr davon abhängen, welche Beschleunigung während des Schaltvorganges aufgetreten ist. So ist es möglich, daß bei leerem Fahrzeug eine große Beschleunigung auftritt und die Motordrehzahl nach der Schaltung vergleichsweise hoch ist, während bei beladenem Fahrzeug eine geringe Beschleunigung auftritt und die Motordrehzahl daher vergleichsweise niedrig ist. Im ersten Fall, bei leerem Fahrzeug, wird durch die unnötig hohe Drehzahl nach der Schaltung ein Verbrauchsnachteil auftreten, während nur bei beladenem Fahrzeug die Drehzahl nach der Schaltung verbrauchsoptimal ist. Zur Vermeidung dieses Effektes wurden daher Schaltprogramme entwickelt, bei denen die Schaltdrehzahlen nicht nur von den Laststufen, sondern zusätzlich noch von der Längsbeschleunigung des Fahrzeuges abhängig sind. Ein derartiges Schaltverfahren ist beispielsweise in der gattungsgemässen Druckschrift DE 195 16 948 A1 beschrieben. Bei dem in dieser Druckschrift offenbarten Verfahren erfolgt das Umschalten beschleunigungsabhängig. So wird je nach Erfordernis bzw. Fahrwiderstand bei kleineren oder größeren Abtriebs- bzw. Motordrehzahlen geschaltet, je nach dem, ob niedriger Kraftstoffverbrauch oder eine ausreichende Beschleunigung zu bevorzugen ist. Für die Schaltung selbst ist die Beschleunigung des Fahrzeuges bzw. dessen Verzögerung maßgebend. Dabei werden immer die zwei folgenden Grenzfahrzustände bzw. Beschleunigungen berücksichtigt:

1. geringe Fahrzeugbeladung in ebenem oder abschüssigem Gelände = hohe Fahrzeugbeschleunigung und

2. hohe Fahrzeugbeladung bei ansteigendem Gelände = geringe Fahrzeugbeschleunigung.

Im erstgenannten Fall ergibt sich dann eine hohe Fahrzeugbeschleunigung bei niedrigen Abtriebsdrehzahlen. Eine Hochschaltung der Gänge kann daher bereits frühzeitig bei relativ niedriger Motordrehzahl erfolgen, was zu einer Senkung des Kraftstoffverbrauchs führt. Aus dem gleichen Grund erfolgt auch die Rückschaltung der Gänge bei kleinerer Verzögerung mit niedriger Motordrehzahl. Im zweiten Fall ist eine größere Motorleistung erforderlich, weshalb die Hochschaltung erst bei einer relativ großen Abtriebsdrehzahl entsprechend einer großen Motordrehzahl erfolgt. In Abhängigkeit von der gemessenen Fahrzeugbeschleunigung bzw. Verzögerung erfolgt die Hochoder Rückschaltung der Gänge zwischen diesen beiden Fahrzuständen gleitend, d.h. in einem Schaltdrehzahlbereich. Der Schaltdrehzahlbereich selbst ist außerdem von der Laststufe abhängig; bei größerer Last wird demzufolge auch bei höherer Drehzahl geschaltet.

Mit diesem Schaltprogramm wird erreicht, daß hohe Beschleunigungen zu einem Hochschalten bereits bei geringeren Fahrgeschwindigkeiten führen, der Betriebspunkt des Motors, d.h. der Verbrennungskraftmaschine wird somit frühzeitig in einen verbrauchsgünstigen Bereich verschoben. Gleichzeitig wird durch die niedrigere Drehzahl nach der Hochschaltung die verfügbare Motorleistung geringer. Beide Effekte zusammen führen zu einer Reduzierung des Kraftstoffverbrauches. Die dadurch begrenzte Motorleistung bei hohen Beschleunigungen ist dabei nur ein erwünschter Nebeneffekt, der die Fahrgäste vor unzulässiger Beschleunigung bei leerem Fahrzeug schützt. Auch bleibt bei Kick-Down die maximal verfügbare Leistung immer erreichbar, da eine Hochschaltung erst bei Erreichen der Abregeldrehzahl erfolgt.

Die Auslegung eines derartigen beschleunigungsabhängigen Schaltprogrammes erfolgt mittels standardisierter Fahrmanöver im Rechner. Die notwendigen Daten über die zulässigen Anschlußdrehzahlen und oberen Grenzdrehzahlen werden dabei aus dem Motorkennfeld gewonnen. Als weitere Parameter werden die Daten des Antriebsstranges (Wandlerkennlinien, Achsübersetzung, etc.) und die Fahrzeugdaten (Masse, Fahrwiderstände) für die Auslegung benötigt. Als Ergebnis der Auslegung wird ein Datensatz für das Schaltprogramm gewonnen, welcher im Normalfall dann in der Steuerung des Getriebes abgelegt wird und mit welchem die gewünschten Anschlußdrehzahlen erreicht werden sollen, ohne daß Gangoszillationen auftreten. Die optimale Funktion eines derartig beschleunigungsabhängigen Schaltprogrammes erfordert die individuelle Abstimmung auf die Gegebenheiten des jeweiligen Antriebsstranges, d.h. beispielsweise die Achsübersetzung, die vorliegenden Reifendurchmesser, den verwendeten Wandlertyp, etc., woraus eine Vielzahl von Schaltprogrammvarianten, die aufwendig zu entwickeln und zu verwalten sind, resultiert. Auch kann die Auslieferung des Getriebes oft nicht mit einem optimalen Schaltprogramm erfolgen, wodurch Reklamationen und Nacharbeit vorprogrammiert sind. Die Häufigkeit des Auftretens dieser Problematik wird sich in Zukunft noch erhöhen, da der Fahrzeughersteller selbst die Fahrzeugdaten für das Getriebe in der Regel noch gar nicht kennt und im Extremfall sogar einzelne Komponenten des Getriebes separat ordert. Bei einem derartigen Schaltprogramme treten deutliche Streuungen der Anschlußdrehzahlen auf, insbesondere in Gängen mit Wandlerbetrieb und insbesondere dann, wenn der Stufensprung sehr groß ist.

Weiterhin ist aus dem Dokument US-A-5063510 folgendes bekannt:

Eine Steuervorrichtung mit wenigstens zwei Eingängen und einem Ausgang zur Ausgabe einer Steuergröße zur wenigstens mittelbaren Ansteuerung eines zur Realisierung eines Gangwechsels betätigbaren Stelgliedes ;

die Eingänge sind jeweils mit Einrichtungen zur Erfassung fahrdynamischer Größen gekoppelt;

mit einer ersten Berechnungseinrichtung zur Festlegung der Grenzdrehzahlen für das Kennfeld des Antriebsmotors ;

mit einer weiteren zweiten Berechnungseinrichtungzur Berechnung der hypothetisch erzielbaren Anschlußdrehzahlen im einzulegenden Zielgang und/oder dem noch aktuellen

Gang bei nicht erfolgender Schaltung aus den über die Eingänge zugeführten fahrdynamischen Größen ;

mit einer, mit der zweiten Berechnungseinrichtung gekoppelten Vergleichseinrichtung, welcher wenigstens die berechneten Anschlußdrehzahlen und desweiteren Grenzdrehzahlen zur Verarbeitung zuführbar sind und die wenigstens mittelbar mit dem Ausgang der Steuervorrichtung verbunden ist.

Der Erfindung liegt daher die Aufgabe zugrunde, ein Verfahren zur Steuerung eines Automatgetriebes für den Einsatz in Antriebssträngen von Fahrzeugen mit einer Verbrennungskraftmaschine und vorzugsweise integriertem CAN-Bus derart weiterzuentwickeln, daß die genannten Nachteile vermieden werden. Im einzelnen soll das Verfahren zur Steuerung eines Schaltvorganges ein Schaltprogramm ermöglichen, welches keine vorherige individuelle Abstimmung auf einen bestimmten Antriebsstrang mehr bedingt. Die Vielfalt der möglichen Schaltprogrammvarianten soll auf ein Minimum reduziert werden. Das Getriebe selbst soll bereits bei Auslieferung mit einem Schaltprogramm ausgestattet werden, welches bereits bei der ersten Inbetriebnahme eine optimale Arbeitsweise des Automatgetriebes im Zusammenhang mit der Verbrennungskraftmaschine ermöglicht. Auch sind starke Streuungen zwischen den zu erreichenden Anschlußdrehzahlen unter gleichen Bedingungen zu vermeiden.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß werden die genannten Nachteile durch eine sogenannte Echtzeitprognose der zu erzielenden Anschlußdrehzahl im Zielgang vermieden. Die herkömmlichen Datensätze bei konventionellen Schaltprogrammen für laststufen-, beschleunigungs- und drehzahlabhängige Schaltdrehzahlen werden nunmehr durch das Kennfeld des Motors, insbesondere der Verbrennungskraftmaschine ersetzt. Es handelt sich dabei in der Regel um ein Leistungs-/Drehzahl-Diagramm oder ein Drehmoment - /Drehzahl-Diagramm. Das Motorkennfeld kann dabei entweder in der Getriebesteuerung direkt erzeugt und hinterlegt sein, wird eingegeben oder eingelesen und gespeichert.

Vorzugsweise wird das erfindungsgemäße Verfahren in Fahrzeugen mit integriertem CAN-Bus eingesetzt. Bei diesen ist das Motorkennfeld in der Regel bereits im CAN-Bus abgelegt bzw. gespeichert und es kann von der Getriebesteuerung aus darauf zurückgegriffen werden. Dadurch sind keine Daten für die Schaltpunkte mehr vorzugeben und die Steuerung des Getriebes paßt sich selbst an. Als Motorkennfeld kann dabei ein Motorleistungs-Motordrehzahlkennfeld oder ein sogenanntes Drehmomenten-/Drehzahlkennfeld des Motors verwendet werden. Dabei werden soweit wie möglich fahrzeugspezifische Daten dem CAN-Bus entnommen bzw. aus dort zur Verfügung stehenden und abrufbaren Meßgrößen berechnet.

Die erfindungsgemäße Lösung ermöglicht es, ein Automatgetriebe mit einem Schaltprogramm zur Verfügung zu stellen, welches keinerlei individuelle Abstimmung auf einen bestimmten Antriebsstrang erfordert. Das Getriebe kann bereits mit dem Schaltprogramm ausgeliefert werden und bei erstmaliger Inbetriebnahme zu einer optimalen Arbeitsweise gelangen, da die erforderlichen Daten automatisch aus dem Motorkennfeld generiert werden.

Das Verfahren zur Steuerung des Schaltvorganges läuft erfindungsgemäß in folgenden Schritten ab:

a) Erfassung oder Ermittlung der Istwerte der fahrdynamischen Größen zu einem bestimmten Zeitpunkt $t_0$
b) Ermittlung der theoretisch erzielbaren Anschlußdrehzahl der Antriebsmaschine, insbesondere der Verbrennungskraftmaschine n_mot_pr_h im Zielgang $g_{ziel} = g_{akt} + n$ mit n =1, wobei für Getriebe mit größerer Ganganzahl auch mehrere Zielgänge untersucht werden können, so daß beispielsweise $n \in (1, 2, 3)$ gilt,
oder n_mot_pr im aktuell eingelegten Gang $g_{akt}$ zum Zeitpunkt $t=t_0 +t_{schalt}$
c) Vergleich der prognostizierten Anschluß bzw. Zieldrehzahlen mit vorgebbaren Grenzdrehzahlen und Entscheidung über

c1) die Vornahme einer Schaltung und
c2 die Art der Schaltung (Hoch- oder Herunterschaltung) in Abhängigkeit des Vergleichsergebnisses.

Für einen vorzunehmenden Schaltvorgang werden dabei im ersten Verfahrensschritt zum Zeitpunkt $t_0$ wenigstens die folgenden fahrdynamischen Größen ermittelt:

- n_mot - Motordrehzahl
- n_ab - Ausgangsdrehzahl des Getriebes
- Ped - Fahrpedalstellung
  Ped_br - Bremspedalstellung
- eine, die Fahrgeschwindigkeit wenigstens mittelbar charakterisierende Größe (v oder $i_{achs}$, $r_{dynamisch}$ zusammen mit der Abtriebsdrehzahl n_ab).

Diese Größen können beim Einsatz des Getriebes in Fahrzeugen mit integriertem CAN-Bus als Kommunikationsschnittstelle zwischen unterschiedlichen Steuereinrichtungen oder einem ähnlichen System zum Teil diesem entnommen werden, teilweise sind jedoch spezielle Sensoren erforderlich. Dabei können die Größen Motordrehzahl, Fahrpedalstellung, Bremspedalstellung und Fahrgeschwindigkeit dem CAN-Bus als Quelle entnommen werden, während für die Erfassung der Ausgangsdrehzahl des Getriebes in der Regel eine entsprechende Einrichtung am Getriebeausgang erforderlich ist. Die obengenannten Größen stellen dabei die zur Funktionsweise des erfindungsgemäßen Verfahrens erforderlichen Größen dar. Um zusätzlichen Anforderungen gerecht zu werden, beispielsweise der Vermeidung unnötiger Schaltvorgänge und die Ermöglichung eines kraftstoffsparenden Fahrverhaltens bei ausreichenden Fahrleistungen können zusätzliche physikalische Größen zur Getriebesteuerung herangezogen werden. Diese Größen stehen in der Regel auch über den CAN-Bus zur Verfügung bzw. können aus den über den CAN-Bus verfügbaren Größen bestimmt werden. Zu diesen gehören:

- P_mot - Motorleistung
- $b_e$ - Kennfeld des spezifischen Kraftstoffverbrauches
- B - Einspritzmenge
- Kennfeld der spezifischen Emissionen
- p - barometrischer Druck
- Psi_Punkt - Gierwinkelgeschwindigkeit

Im anderen Fall, d.h. beim Einsatz in Fahrzeugen ohne derartige Kommunikationsschnittstelle sind zur Erfassung bzw. Ermittlung der einzelnen Größen entsprechende Einrichtungen, vorzugsweise in Form von Sensoren, vorzusehen.

Die Ermittlung der theoretisch erzielbaren Anschlußdrehzahl der Antriebsmaschine, insbesondere der Verbrennungskraftmaschine n_mot_pr_h im Zielgang $g_{ziel} = g_{akt} + n$ oder n_mot_pr im aktuell eingelegten Gang $g_{akt}$ zum Zeitpunkt $t=t_0 + t_{schalt}$ erfolgt kontinuierlich in Zeitabständen von ca. 1 bis max. 10 Millisekunden, die von der Leistungsfähigkeit des in der Steuerung verwendeten Prozessors, insbesondere auch dessen Taktfrequenz abhängen. Die Schaltdauer $t_{schalt}$ schwankt geringfügig und beträgt beispielsweise zwischen 1 und 2s. Für die konkrete Festlegung der Schaltdauer kann von einem Grundvorgabewert ausgegangen werden, welcher bei Vornahme einer Vielzahl von Schaltvorgängen aufgrund des am Ende des Schaltvorganges vorliegenden Ergebnisses modifiziert bzw. angepaßt werden kann. Die Modifikation kann dabei adaptiv, durch eine Regelung oder eine Kombination aus beiden Verfahren erfolgen. Bei dieser Vorgehensweise ist es sinnvoll, auf einen Korrekturwert zurückzugreifen, der die Abweichung der tatsächlich sich einstellenden von der vorhergesagten Anschlußdrehzahl beschreibt. So kann beispielsweise für jede durchgeführte Schaltung der Korrekturwert aus der prognostizierten und der sich einstellenden Anschlußdrehzahl ermittelt werden, wobei dieser in einer Erfahrungstabelle abgelegt werden kann.

Eine andere Möglichkeit besteht darin, bei der Reproduzierbarkeit der Schaltzeit eine Verbesserung durch Berücksichtigung grundlegender physikalischer Zusammenhänge zu realisieren und die theoretische Schaltdauer zu berechnen. So kann beispielsweise die kinetische Überschußenergie des Motors, die während der Schaltung in Wärme umgewandelt wird, mit in die Vorhersage einbezogen werden.

Bei den unter Verfahrensschritt c) genannten Grenzdrehzahlen handelt es sich dabei um die generell maximal und minimal zulässigen beiden Kurven der Motordrehzahlen, welche einen oberen Drehzahlgrenzbereich und einen unteren Drehzahlgrenzbereich im Motorkennfeld festlegen und somit dessen Arbeitsbereich begrenzen.

Die Festlegung der vorgegebenen Grenzen für die Schaltdrehzahlen (untere Kurve der minimal zulässigen Schaltdrehzahl und obere Kurve der maximal zulässigen Schaltdrehzahl) erfolgt durch automatische Generierung aus dem Motorkennfeld in Abhängigkeit von charakteristischen Punkten in diesem. Die Generierung erfolgt über die Getriebesteuerung. Dabei wird der Bezug auf die Laststufen beim erfindungsgemäßen Verfahren verlassen, da der Zugriff auf die Fahrpedalstellung beim Einsatz in Fahrzeugen mit integriertem CAN-Bus oder einer ähnlichen Kommunikationsschnittstelle zwischen einzelnen Steuergeräten über den sogenannten CAN-Bus stufenlos erfolgen kann. Die Grenzkurven für den oberen und unteren Drehzahlgrenzbereich können somit durch stufenlose Kurven generiert werden. Unter dem Begriff CAN wird dabei der sogenannte CAN-Bus verstanden, ein Leitungspaar, das gleich einer Nervenbahn die einzelnen Steuergeräte im Fahrzeug miteinander verbindet. Dieses Leitungspaar dient dabei in erster Linie der Kommunikation der Steuergeräte untereinander. Die einzelnen Steuergeräte werden dabei durch ein Kommunikationssystem vernetzt, das in der Lage ist, den notwendigen Datenaustausch zu führen.

Bei dem sogenannten CAN-Bus nimmt beispielsweise ein Steuergerät die Information für die Drehzahl auf, wandelt diese in eine für alle anderen Steuergeräte lesbare Form um und sendet diese Nachricht auf den CAN-BUS, von wo aus diese für alle anderen Steuergeräte abrufbar ist.

Im anderen Fall, bei Hinterlegung des Motorkennfeldes in der Getriebesteuerung durch Einlesen der entsprechenden Daten oder Programmierung, d.h. nichtautomatischer Zugriff auf die Kenndaten bei Koppelung der Getriebesteuerung mit anderen Steuereinrichtungen beim Einsatz in Fahrzeugen ohne Kommunikationsschnittstellen, werden die Grenzdrehzahlen in der gleichen Art und Weise aus dem in der Getriebsteuerung hinterlegten Motorkennfeld erzeugt bzw. abgeleitet.

Im einfachsten Fall werden sogenannte Grundgrenzdrehzahlbereiche festgelegt, welche zur Erzielung zusätzlicher vorteilhafter Eigenschaften verkleinerbar und/oder hinsichtlich ihrer Grenzen verschiebbar gegenüber dem Grunddrehzahlgrenzbereich sind. Der obere Grunddrehzahlgrenzbereich, d.h. die sogenannte Hochschaltlinie wird dabei durch wenigstens drei Punkte $P_{h1}$ bis $P_{h3}$ festgelegt. Zur Festlegung der Koordinaten für das Hoch- oder Herunterschalten sind Werte in Form von Faktoren, beispielsweise $k_{h1}$, $k_{h2}$, $k_{h3}$ und $k_{r1}$, $k_{r2}$ so zu bestimmen, daß diese für nahezu jeden Motor gültig sind. Die Festlegung der Faktoren kann dabei anhand einer Vielzahl realer Motorkennfelder erfolgen und nach statistischen Kriterien abgesichert werden. Die einzelnen Punkte bestimmen sich dann wie folgt:

- Punkt $P_{h1}$ = (Drehzahl $n_{h1} = k_{h1} \times n_{abregel}$; M auf Vollastlinie)
- Punkt $P_{h2}$ = ($n_{r2}$ = max $\{k_{h2} \times (n_{abregel} - n_{min}) + n_{min}; n_{r2} \times i_{spr}\}$; M ergibt sich durch den Schnittpunkt mit der Linie eines bestimmten spezifischen Kraftstoffverbrauches $b_e$, beispielsweise $b_e$ = 230 g/(kWh))
- Punkt $P_{h3}$ = ($\{n_{h3}$ = max $[k_{h3} \times n_{h2}; n_{r3} \times i_{spr}\}$; M=0)

Für die Bestimmung des unteren Grunddrehzahlgrenzbereiches sind ebenfalls wenigstens drei Punkte $P_{r1}$, $P_{r2}$ und $P_{r3}$ erforderlich.

- $P_{r1}$ entspricht dabei dem Abknickpunkt der Vollastlinie bei konstantem Motormoment, wenn die Vollastlinie in Richtung nach unten fallender Drehzahl durchlaufen wird
- $P_{r2}$ ergibt sich aus dem Schnittpunkt der Vollastlinie mit der Kennlinie für den spezifischen Kraftstoffverbrauch, welcher für die Festlegung des zweiten Punktes $P_{h2}$ verwendet wurde oder dieser wird aus der Beziehung $n_{r2} = k_{r2} \times n_{r1}$ ermittelt.
- $P_{r3}$ ergibt sich aus der Fällung des Lotes von Punkt $P_{r2}$ auf die Drehzahlachse.

Als zusätzliche Anforderung muß der durch die Grundgrenzdrehzahlkurven festgelegte Bereich des weiteren zur Vermeidung von Gangoszillationen ein Drehzahlverhältnis größer als der maximale Gangsprung $i_{spr}$ aufweisen. Deshalb gilt:

$$n_{h3}/n_{r3} > i_{spr}.$$

Dies führt dann zu den obengenannten Bedingungen für $n_{h2}$ und $n_{h3}$, durch deren Vorgabe Gangoszillation zuverlässig vermieden werden und der so definierte Arbeitsbereich des Motors zu einem einwandfreien Schaltverhalten führen sollte, wobei auch die Belange verbrauchsgünstigen Betriebes miteinbezogen werden.

Zur Erzielung vorteilhafter Eigenschaften sind zusätzliche Eingrenzungen des Arbeitsbereiches der Verbrennungskraftmaschine durch Veränderung des Grundgrenzdrehzahlbereiches möglich. Denkbar ist eine Beschränkung des Arbeitsbereiches der Verbrennungskraftmaschine im Hinblick auf verbrauchsgünstiges Verhalten in Abhängigkeit von Fahrdynamik und Fahrerwunsch. Die Berücksichtigung dieser Größen setzt jedoch zusätzliche Sensoren zu deren Erfassung voraus. Fallen diese Sensoren aus, bleibt jedoch der Grundgrenzdrehzahlbereich und damit der Grundarbeitsbereich der Verbrennungskraftmaschine erhalten.

Die Eingrenzung des Arbeitsbereiches kann beispielsweise u.a. in Abhängigkeit von folgenden Größen erfolgen:

- Gaspedalgeschwindigkeit und/oder
- Fahrzeugmasse und/oder
- Fahrbahnsteigung.

Bei hoher Gaspedalgeschwindigkeit d.h. Wunsch nach mehr Leistung, soll dabei der zulässige Drehzahlbereich zu höheren zulässigen Drehzahlen gegenüber dem durch die Grundgrenzdrehzahlen begrenzten Arbeitsbereich hin verschoben werden. Dadurch wird es möglich, daß dem Fahrer, der durch seine Gaspedalbewegungen Ungeduld gezeigt hat, eine erhöhte Leistungsbereitschaft zur Verfügung gestellt wird, indem die unteren Motordrehzahlen nicht mehr genutzt werden können.

Als ein weiteres Kriterium kann die Fahrzeugmasse eine Verschiebung des Arbeitsbereiches bewirken. So arbeitet ein leeres Fahrzeug mit nach links verschobenem Arbeitsbereich. Ist das Fahrzeug voll wird der Arbeitsbereich im Drehmoment-/Drehzahlkennfeld des Motors nach rechts verschoben. Ähnliches wie für die Fahrzeugmasse gilt auch für die Fahrbahnsteigung.

Da das erfindungsgemäße Verfahren vorzugsweise in Automatgetrieben von Fahrzeugantriebssträngen Verwendung findet, welche mit einem CAN-Bus oder einem ähnlichen System ausgerüstet sind, kann die Steuervorrichtung der Getriebesteuerung auf das im CAN-Bus hinterlegte Motorkennfeld zurückgreifen. Die Getriebesteuerung generiert dann bei erstmaliger Inbetriebnahme des Antriebsstranges wenigstens die Grundgrenzdrehzahlen im Motorkennfeld und grenzt damit den Arbeitsbereich für die Zusammenarbeit Motor-Getriebe ein. Für den Fall, daß weitere vorteilhafte Eigenschaften der vorzunehmenden Schaltvorgänge (beispielsweise Vornahme von Schaltungen nur im verbrauchsgünstigsten Bereich) erzielt werden sollen, kann dies ebenfalls bei der Generierung der Grenzdrehzahlbereiche mit Berücksichtigung finden. Der entsprechende Algorithmus zur automatischen Generierung des Grundgrenzbereiches bzw. der möglichen Einschränkungen dieses Bereiches ist Bestandteil der Getriebesteuerung und wird mit Auslieferung des Getriebes und der zugehörigen Steuervorrichtung mit angeboten. Das derart hinsichtlich des Arbeitsbereiches eingegrenzte Motorkennfeld kann dann in einer Speichereinheit der Getriebsteuerung und/oder im CAN-Bus hinterlegt werden. Desweiteren ist in der Getriebesteuerung der Algorithmus für die Entscheidung zur Vornahme und Wahl der Art des zu realisierenden Schaltvorganges hinterlegt, welcher fortlaufend abgearbeitet wird. Die entsprechenden zu berücksichtigenden Eingangsgrößen werden, wie bereits ausgeführt zum Großteil über den CAN-Bus entnommen bzw. der Getriebsteuerung über entsprechende Kopplungen mit den dazu erforderlichen Erfassungseinrichtungen zugeführt. Die Getriebesteuervorrichtung weist zur Realisierung des erfindungsgemäßen Verfahrens desweiteren eine Berechnungseinrichtung auf, welche die hypothetisch erzielbaren Anschlußdrehzahlen im einzulegenden Zielgang und/oder dem noch aktuellen Gang bei nicht erfolgender Schaltung ermitteln. Die Berechnungseinrichtung ist mit einer Vergleichseinrichtung gekoppelt, welcher wenigstens die berechneten Größen und die Grenzdrehzahlen zur Verarbeitung zuführbar sind. Entsprechend des Ergebnisses des Vergleiches wird wenigstens eine Steuergröße zur Ansteuerung der zum Gangwechsel zu betätigenden Stellglieder erzeugt und ausgegeben. Der Gangwechsel wird vollzogen oder nicht. Die Berechnungseinrichtung zur Ermittlung der hypothetisch erzielbaren Anschlußdrehzahlen und die Berechnungseinrichtung zur Festlegung der Grenzdrehzahlbereiche können in einer Baueinheit zusammengefaßt sein, müssen dies jedoch nicht. Die Weiterverarbeitung der Steuergröße oder Steuergrößen zur Ansteuerung der zum Gangwechsel zu betätigenden Stellglieder hängt dabei von der Art des Getriebes, des Aufbaus und der zu betätigenden Stelleinrichtungen ab und liegt damit im Tätigkeitsbereich des zuständigen Fachmannes.

Die erfindungsgemäße Lösung wird nachfolgend anhand von Figuren erläutert. Darin ist im einzelnen folgendes dargestellt:

Fig. 1    verdeutlicht anhand eines Signalflußbildes in schematisch vereinfachter Darstellung das erfindungsgemäße Grundprinzip der Steuerung des Gangwechsels in Automatgetrieben zwischen zwei Gangstufen;

Fig. 2      verdeutlicht anhand eines Motorkennfeldes die Generierung der Begrenzung des Arbeitsbereiches durch die Kennlinien für die maximale und minimale Grenzdrehzahl;

Fig. 3      verdeutlicht ein Motorkennfeld gemäß Fig. 2 mit Eingrenzung des Arbeitsbereiches zur Verbesserung des Verbrauchsverhaltens;

Fig. 4a bis 4c      verdeutlichen anhand von Motorkennfeldern mögliche Eingrenzungen des Arbeitsbereiches gegenüber dem in der Fig. 2 dargestellten Grundarbeitsbereich für unterschiedliche Anforderungen;

Fig. 5      verdeutlicht in schematisch stark vereinfachter Darstellung anhand eines Blockschaltbildes den Grundaufbau einer Getriebesteuerung zur Durchführung des erfindungsgemäßen Verfahrens in Fahrzeugen mit integriertem CAN-Bus oder einer ähnlichen Kommunikationsschnittstelle.

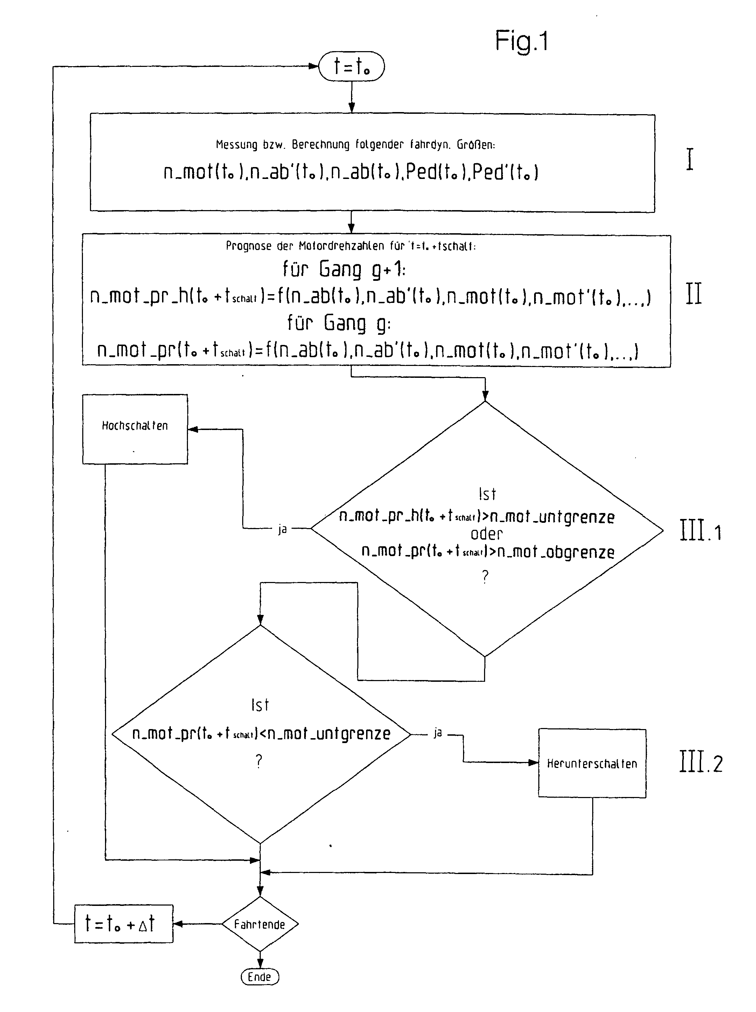

Die Figur 1 verdeutlicht anhand eines Signalflußbildes in schematisch vereinfachter Darstellung das erfindungsgemäße Grundprinzip der Steuerung des Gangwechsels in Automatgetrieben zwischen zwei Gangstufen. Alle erforderlichen Eingabedaten für dieses Verfahren beziehen sich dabei nur auf die Antriebsmaschine, insbesondere die Verbrennungskraftmaschine und werden automatisch ermittelt. Im wesentlichen umfaßt das Verfahren drei Verfahrensschritte. In einem ersten Verfahrensschritt I werden dabei zu einem bestimmten Zeitpunkt $t_0$ wenigstens die folgenden fahrdynamischen Größen ermittelt, d.h. erfaßt oder berechnet:

-   n_ab - Abtriebsdrehzahl am Getriebeausgang
-   n_ab' - Abtriebsdrehzahlbeschleunigung am Getriebeausgang
-   n_mot - Motordrehzahl
-   n_mot'- Motordrehzahlbeschleunigung
-   Ped - Fahrpedalstellung
-   Ped' - Geschwindigkeit der Änderung der Fahrpedalstetlung.

Für jeden Zeitschritt $t = t_0 + t_{Schalt}$ wird in einem zweiten Verfahrensschritt aus den erfaßten oder berechneten Istgrößen die theoretisch erzielbare Anschlußdrehzahl der Antriebsmaschine im Zielgang ermittelt. Im einzelnen wird für einen hypothetisch angenommenen Hochschaltvorgang die Anschlußdrehzahl, d.h. die Zieldrehzahl der Antriebsmaschine, insbesondere der Verbrennungskraftmaschine n_mot_pr_h und für die aktuelle, für diesen Zeitpunkt noch eingelegte Gangstufe die Motordrehzahl n_mot_pr aus den Meßgrößen für den zukünftigen Zeitpunkt $t = t_0 + t_{Schalt}$ berechnet. Der verwendete Index pr steht dabei für Prognose. Den beiden hypothetisch ermittelten Anschluß- bzw. Zieldrehzahlen kommt dabei folgende Bedeutung zu:

-   n_mot_pr_h = prognostizierte Motordrehzahl für den Zeitpunkt $t = t_0 + t_{Schalt}$ im Zielgang, d.h. in der Gangstufe g + 1 oder g + n nach Hochschaltung von der Gangstufe g
-   n_mot_pr = prognostizierte Motordrehzahl für der Zeitpunkt $t = t_0 + t_{Schalt}$ in der Gangstufe g, wenn nicht geschaltet würde.

In einem dritten Verfahrensschritt III werden die prognostizierten Anschluß bzw. Zieldrehzahlen mit vorgegebenen Grenzdrehzahlen verglichen. Bei den Grenzdrehzahlen handelt es sich dabei um die Kurve der maximal und minimal zulässigen Motordrehzahlen, welche einen oberen Drehzahlgrenzbereich und einen unteren Drehzahlgrenzbereich im Motorkennfeld charakterisieren. Diese begrenzen den Arbeitsbereich des Motors, insbesondere der Verbrennungskraftmaschine. Auf die Vorgabe bzw.

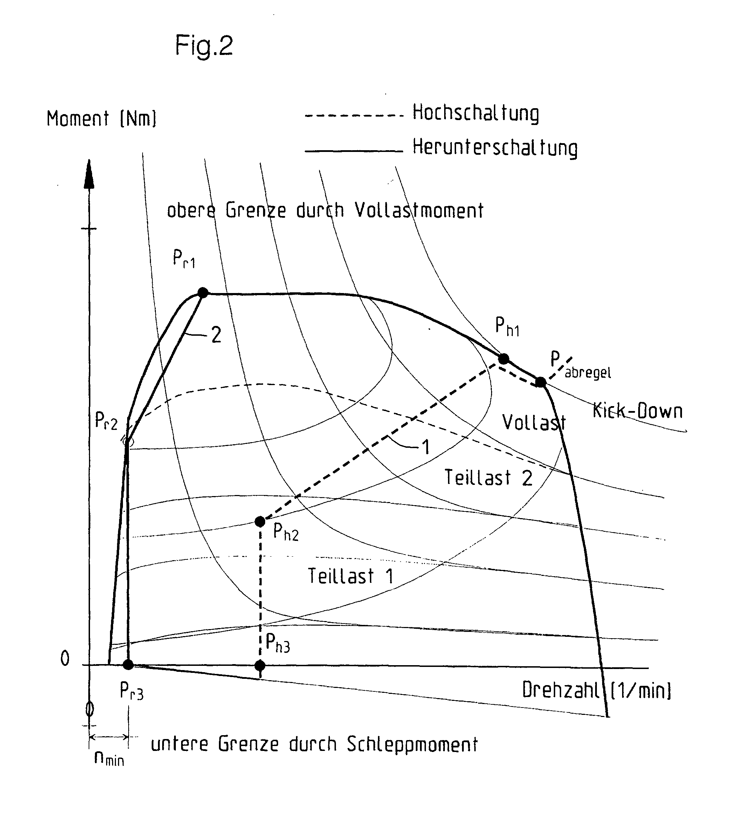

Erzeugung der Kennlinien für den oberen und unteren Drehzahlgrenzbereich im Motorkennfeld wird im Detail in der Beschreibung zu Figur 2 eingegangen. Der untere Drehzahlgrenzbereich bestimmt dabei die unteren zulässigen Motordrehzahlen im Motorkennfeld, während der obere Drehzahlgrenzbereich die oberen Grenzdrehzahlen im Motorkennfeld charakterisiert.

Im dritten Verfahrensschritt III erfolgt dabei ein Vergleich der prognostizierten Anschluß- bzw. Zieldrehzahlen mit der unteren zulässigen Motordrehzahl im Motorkennfeld bzw. der oberen zulässigen Motordrehzahl im Motorkennfeld. Im einzelnen wird dabei in einem ersten Teilschritt III.1 die prognostizierte Motordrehzahl für den Zeitpunkt $t = t_0 + t_{Schalt}$ in der Gangstufe g + 1 nach einer hypothetisch angenommenen erfolgten Hochschaltung vom Gang g aus in den nächst höheren Gang mit der unteren zulässigen Motordrehzahl im Motorkennfeld verglichen. Liegt dabei die prognostizierte Drehzahl n_mod_pr_h oberhalb der gewünschten Anschlußdrehzahl des Motors, wird tatsächlich um eine Gangstufe hochgeschaltet, d.h. wenigstens ein Ausgangssignal zur Ansteuerung der zur Vornahme des Schaltvorganges zu betätigenden Stellglieder erzeugt. Liegt alternativ die prognostizierte Motordrehzahl für den Zeitpunkt $t = t_0 + t_{Schalt}$ in der Gangstufe g, wenn nicht geschaltet wird oberhalb der oberen Grenzdrehzahl, wird ebenfalls ein Hochschaltvorgang vorgenommen. Liegt diese jedoch unterhalb der unteren zulässigen Motordrehzahl, d.h. unterhalb des unteren Drehzahlgrenzbereiches, wird heruntergeschaltet. Dies entspricht Verfahrensschritt III.2. Werden beide Bedingungen nicht erfüllt, wird kein Schaltvorgang vorgenommen.

Für einen Algorithmus, der die Anschlußdrehzahl prognostizieren soll, kann als Basis beispielsweise von folgender Gleichung ausgegangen werden:

$$n\_mot\_pr\_h(t_0 + t_{Schalt}) = (n\_ab'(t_0) \times t_{Schalt} + n\_ab(t_0)) \times i(g+1) + f\_korr$$

Dabei wird für die Berechnung angenommen, daß sich die Abtriebsbeschleunigung, d.h. die Beschleunigung am Getriebeausgang während des Schaltvorganges nicht ändert. Sinnvoll aber nicht zwingend erscheint dafür die Definition eines Korrekturwertes f_korr, der die Abweichung der tatsächlich erreichten Anschlußdrehzahl von der vorhergesagten Anschlußdrehzahl beschreibt. Es besteht dabei die Möglichkeit, diesen Wert für jede durchgeführte Schaltung aus der Differenz zwischen der berechneten, d.h. prognostizierten und der tatsächlich erreichten Anschlußdrehzahl zu berechnen und in einer sogenannten Erfahrungstabelle abzuspeichern, in der auch zusätzlich die Bedingungen abspeicherbar sind, die zum Zeitpunkt der Auslösung des Schaltvorganges vorlagen. Bei einem erneuten Schaltvorgang könnte dann auf Schaltungen mit vergleichbaren Ausgangsbedingungen aus der Tabelle zurückgegriffen und die Anschlußdrehzahl mit Hilfe des dort angegebenen Korrekturwertes berechnet werden. Um jedoch bei einer begrenzten Anzahl von Schaltvorgängen einander ähnliche zusammenzufassen, ist eine Klassierung der Schaltung erforderlich. Diese kann auf unterschiedliche Art und Weise vorgenommen werden. Beispielsweise ist es denkbar, für jede der zu erfassenden oder zu berechnenden physikalischen Größen zwischen einem Minimalwert und einem Maximalwert eine bestimmte Anzahl von Klassen vorzusehen, so daß auf diese Weise vergleichbare Schaltungen auch bei relativ wenigen Meßwerten gefunden werden können. Vorzugsweise sollte die Tabelle jedoch je möglichem Gang mindestens ca. 50 Vergleichsschaltungen enthalten.

Unter einem weiteren Aspekt der Erfindung werden zusätzliche Angaben, beispielsweise über Masse und Steigung zur Erzielung vorteilhafter Eigenschaften bezogen auf den Schaltvorgang mit berücksichtigt. Dies setzt jedoch das Vorhandensein entsprechender Erfassungsmittel, beispielsweise in Form von Sensoren, voraus. Diese könnten dazu beitragen, daß vergleichbare Bedingungen zum Beispiel für Steigungsfahrten auffindbar werden, was zu einer engeren Eingrenzung der Bedingungen eines bestimmten Schaltvorganges führt und damit das Auffinden einer vergleichbaren Schaltung erleichtern würde.

Weitere Verbesserungen der Getriebesteuerung beim Gangstufenwechsel können fakultativ durch eine permanente Datenerfassung in der Steuerung erzeugt werden, in welcher zusätzlich beispielsweise die Verweilzeiten je Getriebegangstufe in einer Drehzahl-Drehmoment-Matrix gespeichert werden. Eine Auswertung dieser Matrix kann dann zur automatischen Korrektur des Schaltprogrammes verwendet werden, wenn erkannt wird, daß ungünstige Betriebspunkte häufig gefahren werden.

Ergänzend zu der Drehzahl-Drehmoment-Matrix kann zusätzlich auch eine Kick-Down-Matrix eingeführt werden. In dieser Matrix kann die Anzahl der Kick-Down-Schaltungen für jeden Gang gezählt und ebenfalls in einer Drehzahl-Drehmoment-Matrix dargestellt werden. Häufungen einzelner Punkte führen zum Aufzeigen möglicher Schwachpunkte der Steuerung.

Ebenfalls zusätzlich zur Schwachstellenidentifikation kann eine sogenannte Oszillationsmatrix erstellt werden. Darin werden für jede Gangstufe in einer Drehmoment-Drehzahl-Matrix die Gangoszillationen registriert. Dies geschieht in einer Form, daß die Drehzahl-Drehmoment-Klasse, die vor der oszillierenden Schaltung vorlag, gespeichert wird. Ein gehäuftes Auftreten zeigt dann an, daß offensichtlich das Schaltprogramm unter den aktuellen Bedingungen nicht optimal arbeitet.

In der nachfolgenden Tabelle 1 werden die für die Entscheidung eines vorzunehmenden Gangstufenwechsels entsprechend dem erfindungsgemäßen Verfahren erforderlichen zu berücksichtigenden Größen nochmals zusammengefaßt dargestellt. Die zusätzlich berücksichtbaren Größen zur Durchführung des Schaltvorganges selbst, insbesondere zur Herbeiführung einer Verbesserung des Schaltkomforts, werden dabei nicht berücksichtigt.

Die in der folgenden Tabelle angegebenen physikalischen Größen zur Steuerung des Gangwechsels sollen dabei die Realisierung für kraftstoffsparenden, aber gleichzeitig dem Fahrerwunsch entsprechenden Fahrverhalten verwendet werden. Die Angabe "Startwert nötig" bedeutet, daß zur ersten Inbetriebnahme des Fahrzeugs bereits eine Angabe im Datensatz vorliegen muß; andernfalls wäre keine ordnungsgemäße Funktion bei Inbetriebnahme des Getriebes möglich. Die Angabe "verzichtbar" führt zur Festlegung der unbedingt zu dieser Funktionsweise erforderlichen Größen.

Die Quellenangaben für die fahrdynamischen Größen beziehen sich dabei immer auf die bevorzugte Anwendung des Verfahrens beim Einsatz von Automatgetrieben in Fahrzeugen mit integriertem CAN-Bus oder einem ähnlichen Kommunikationssystem. Bei Fahrzeugen ohne derartige Kommunikationsschnittstellen werden diese Größen über separate Erfassungsmittel ermittelt bzw. aus den erfaßten Größen berechnet.

Die in der Tabelle getroffenen Aussagen bezüglich der Verzichtbarkeit sind jedoch für beide Fahrzeugausstattungen verbindlich.

Tabelle 1

| Größe | Quelle | verzichtbar? | Startwert nötig? |
|---|---|---|---|
| Motordrehzahl n_mot [1/min] | CAN-BUS | nein | nein |
| Ausgangsdrehzahl Getriebe n_ab [1/min] | Drehzahlsensor am Getriebeausgang | nein | nein |
| Fahrgeschwindigkeit v [km/h] | CAN-BUS | ja, wenn $i_{achs}$, $r_{dyn}$ in Steuerungssatz eingegeben wird | wenn nicht vorhanden, ist Achsübersetzung und Radradius nötig |
| Motorleistung P_mot [kW] | CAN-BUS | ja, doch dann nur Steuerung über Drehzahl | nein |
| Kennfeld d. spez. Krafstoffverbrauch b_e [g/(kWh)] oder Einspritzmenge B [kg/h] | CAN-BUS | ja, wenn weniger als 6 Gänge | nein, wenn im CAN verfügbar |
| Kennfeld d. spez. Emissionen für NOx, Partikel [g/(kWh)] [kg/h] | CAN-BUS | ja | nein |
| Fahrpedalstellung Ped [%] | CAN-BUS | nein | nein |
| Bremspedalstellung Ped_br [%] | CAN-BUS | nein | nein |
| barometrischer Druck p [Pa] | CAN-BUS / evtl. zusätzl. Sensor | ja | nein |
| Gierwinkelgeschwindigkeit psi_punkt [%] | CAN-BUS | ja | nein |

Die nachfolgende Tabelle 2 verdeutlicht die aus den in der Tabelle 1 erforderlichen Größen im zweiten Verfahrensschritt abgeleiteten bzw. ermittelten Größen.

Tabelle 2

| Größe | berechnet aus | verzichtbar? | Startwert nötig? |
|---|---|---|---|
| Drehbeschleunigung $n\_mot$ [1/(min s)] | $d(n\_mot)/dt$ | ja | nein |
| Drehbeschleungigung Getriebeausgangsdrehzahl $n\_ab'$ [1/(mins$^2$)] | $d(n\_ab)/dt$ | nein | nein |
| $r_{dyn}/i_{achse}$ | Geschwindigkeit und Abtriebsdrehzahl | nein | Schätzwert reicht aus |
| Längsbeschleunigung $a$[m/s$^2$] | $n\_ab'*r_{dyn}/i_{achse}$ | nein | nein |
| Fahrpedalgeschwindigkeit Ped' [% /s] | $d(Ped)/dt$ | nein | nein |
| Längsneigung der Fahrbahn $\alpha$ [Grad] | $\{h(t)-h(t-dt)\}/\{s(t)-s(t-dt)\}$ | ja | nein |
| Fahrzeugmasse $m$ [kg] | aus CAM-BUS (Druck der Luftlederbälge) oder durch Berechnung aus Längsbeschleunigung, Fahrbahnneigung, Motorleistung | ja | nein |

Zur Bedeutung der Größen im einzelnen:

a) Motordrehzahl und deren Ableitung:

Die Motordrehzahl und deren Ableitung sind auf sehr einfache Weise verfügbar und sie können entscheidend helfen, die Treffsicherheit bei der Erreichung der Anschlußdrehzahl des Motors zu verbessern. Da die kinetische Energie von Motor und Getriebe bei einer Schaltung sich schlagartig ändern und damit die Schaltzeit und die Fahrzeugbeschleunigung beeinflussen kann, ist die Motordrehzahl auf jeden Fall zu berücksichtigen.

b) Ausgangsdrehzahl des Getriebes und deren Ableitung:

Aus diesen Größen können die Fahrgeschwindigkeit und
Längsbeschleunigung des Fahrzeuges ermittelt werden.

c) Fahrgeschwindigkeit:

Die Fahrgeschwindigkeit ist für die Bestimmung der Übersetzung zwischen Getriebeausgang und Rad notwendig, so daß diese Größen selbständig berechnet werden und nicht mehr vorgegeben werden müssen. Andererseits kann die Fahrgeschwindigkeit bei Vorgabe der Übersetzung zwischen Getriebeausgang und Rad und dynamischen Rollradius aus diesen Größen abgeleitet werden.

d) Motorleistung:

Die Motorleistung (oder ersatzweise das Motormoment und die Drehzahl) kann als zusätzliche Größe verwendet werden, insbesondere dann, wenn das Getriebe eine größere Gangzahl aufweist und dadurch Schaltungen von mehr als einem Gang möglich sind: die Fahrpedalstellung des Fahrers wird dann als Leistungswunsch interpretiert und die Steuerung des Getriebes wählt möglichst nur solche Gänge aus, die Betriebspunkte mit gleicher Leistung zur

Verfügung stellen können.

e) spezifischer Kraftstoffverbrauch:

Der spezifische Kraftstoffverbrauch, welcher auch aus Einspritzmenge und Leistung berechnet werden kann, wird sinnvollerweise dann Verwendung finden, wenn um mehr als einen Gang geschaltet werden soll. Es kann dann auch der spezifische Verbrauch für die Gangwahl verwendet werden.

f) Emissionskennwerte:

Emissionskennwerte werden immer bedeutsamer. Sie liegen in ähnlicher Form wie das Motorkennfeld vor und es kann möglicherweise der Wunsch bestehen, diese Daten zur Steuerung heranzuziehen. Man wird damit unter bestimmten Bedingungen (z.B. hohe Beschleunigungen) bestimmte Kennfeldbereiche im Motorkennfeld (links von be_min wegen Partikelemissionen) vermeiden, was über vorzugebende Zusatzbedingungen in der Steuerung realisiert werden muß.

g) Fahrpedalstellung:

Die Fahrpedalstellung repräsentiert den Fahrerwunsch nach Leistung und ist damit eine entscheidende Größe. Kick-Down soll nach wie vor den Punkt der höchstmöglichen Leistung zur Verfügung stellen.

h) Geschwindigkeit der Änderung der Fahrpedalstellung:

Die Geschwindigkeit der Änderung der Fahrpedalstellung stellt ein Maß für die Intensität des Fahrerwunsches dar. Hohe Geschwindigkeiten signalisieren Ungeduld des Fahrers und sollen eine schnelle Bereitstellung der verfügbaren Motorleistung bewirken. Diese Größe wird derzeit bereits von vielen Automatikgetrieben in Personenkraftwagen zur Steuerung verwendet. Neben dem aktuellen Wert der Fahrpedalgeschwindigkeit kann diese jedoch auch über einen bestimmten Zeitraum (z. B. 30 Sekunden) aufgezeichnet und bewertet werden. Treten in diesem Zeitraum häufige schnelle Gaspedalbewegungen auf, so sollte dies in die Gangwahl mit einbezogen werden.

i) Steigung der Fahrstrecke:

Die Kenntnis der Steigung der Fahrstrecke dient als Ergänzung zur Bestimmung der Fahrwiderstände, wodurch der Leistungsbedarf für Konstantfahrt berechnet werden kann. So sollte bei einer Fahrt bergauf stets eine größere Leistung verfügbar sein als bei Bergabfahrt. Diesem fahrdynamisch einsichtigem Wunsch soll die Getriebesteuerung Rechnung tragen.

j) Fahrzeugmasse:

Die Berücksichtigung der Größe Fahrzeugmasse hat eine ähnliche Wirkung wie die Steigung der Fahrstrecke. Eine große Fahrzeugmasse bedeutet für die Getriebesteuerung, daß bei höheren Drehzahlen umgeschaltet wird als bei geringer Fahrzeugmasse. Die Fahrzeugmasse kann über den Druck der Luftbälge (wenn im CAN-Bus vorhanden) oder aber durch Auswertung von Motorleistung, Längsbeschleunigung und Fahrwiderständen bestimmt werden.

k) Bremspedalkraft:

Die Bremspedalkraft stellt den Fahrerwunsch nach Bremskraft dar und ist damit entscheidend für die Ansteuerung des Retarders und/oder der Betriebsbremse. Die Bremsung führt zu einer Geschwindigkeitsreduktion, wodurch Schaltvorgänge ausgelöst werden. Die Information, daß der Fahrer keine Antriebsleistung benötigt, muß ebenfalls bei der Wahl der Schaltungen berücksichtigt werden.

i) Gierwinkelgeschwindigkeit:

Es ist bekannt, die Gierwinkelgeschwindigkeit zu berücksichtigen. Der dafür genutzte Sensor könnte zukünftig auch in Bussen zur Stabilitätskontrolle eingesetzt werden und stünde damit auch für die Zwecke der Getriebesteuerung zur Verfügung. Die Verwendung der Information ist sehr einfach: Nimmt der Betrag der Gierwinkelgeschwindigkeit zu, so fährt das Fahrzeug in eine Kurve hinein und ein Hochschalten des Getriebes sollte unterbleiben. Nimmt der Betrag der Gierwinkelgeschwindigkeit ab, so fährt das Fahrzeug aus einer Kurve heraus und es kann hochgeschaltet werden. Eine weitere Möglichkeit besteht darin, die Lenkwinkelbewegung zur Erkennung von Bergfahrt zu berücksichtigen, was anhand der für Serpentinenfahrt charakteristischen Muster von Lenkwinkelbewegungen möglich ist. Es wird dann ein bestimmtes Bergprogramm gefahren.

Die Figur 2 verdeutlicht anhand eines Drehmoment-Drehzahl-Diagrammes eine mögliche automatisierte Festlegung der vorgegebenen Grenzen für die Schaltdrehzahlen durch automatische Generierung aus dem Motorkennfeld. Erfindungsgemäß erfolgt die Festlegung der maximal- und minimal zulässigen Grenzdrehzahlen in Abhängigkeit von charakteristischen Punkten im Motorkennfeld. Dabei wird der Bezug auf die Laststufen beim erfindungsgemäßen Verfahren verlassen, da der Zugriff auf die Fahrpedalstellung über einen sogenannten CAN-Bus stufenlos erfolgen kann. Die Grenzkurven für den oberen und unteren Drehzahlgrenzbereich können somit durch kontinuierliche Kurven generiert werden. Unter dem Begriff CAN wird der sogenannte CAN-Bus verstanden, ein Leitungspaar, das gleich einer Nervenbahn die einzelnen Steuergeräte im Fahrzeug miteinander verbindet. Dieses Leitungspaar dient dabei in erster Linie der Kommunikation der Steuergeräte untereinander. Um den Verbund zwischen den einzelnen Steuergeräten herzustellen gibt es dabei prinzipiell zwei unterschiedliche Möglichkeiten:

a) die einzelnen Steuergeräte werden zu einer umfassenden Zentralelektronik zusammengefaßt

b) die einzelnen Steuergeräte werden durch ein Kommunikationssystem vernetzt, das in der Lage ist, den notwendigen Datenaustausch zu führen.

Bei dem sogenannten CAN-Bus nimmt beispielsweise ein Steuergerät die Information für die Drehzahl auf, wandelt diese in eine für alle anderen Steuergeräte lesbare Form um und sendet diese Nachricht auf den CAN-BUS, von wo aus diese für alle anderen Steuergeräte abrufbar ist.

Der obere Drehzahlgrenzbereich, d.h. die sogenannte Hochschaltlinie, hier mit 1 bezeichnet, wird dabei erfindungsgemäß durch wenigstens drei Punkte festgelegt, diese sind mit $P_{h1}$ bis $P_{h3}$ bezeichnet. Dazu sind Werte in Form von Faktoren, hier der Faktoren $k_{h1}$, $k_{h2}$, $k_{h3}$ so zu bestimmen, daß diese für jeden Motor gültig sind. Diese Festlegung kann anhand realer Motorkennfelder erfolgen und nach statistischen Kriterien abgesichert werden. Für

den Punkt $P_{h1}$ ergibt sich die Drehzahl $n_{h1}$ aus dem Produkt von $k_{h1}$ und $n_{abregel}$. Der obere Grenzbereich im Drehzahl-Drehmomenten-Kennfeld wird durch die Vollastlinie festgelegt. Für den Punkt $P_{h2}$ wurde ein bestimmter spezifischer Kraftstoffverbrauch $b_e$ gewählt, beispielsweise $b_e$ = 230 g/(kWh). Die zum Auffinden der zugehörigen Koordinate im Drehzahl-Drehmomenten-Kennfeld erforderliche Drehzahl $n_{h2}$ ergibt sich aus

$$n_{h2} = max \{k_{h2} \times (n_{abregel} - n_{min}) + n_{min}; n_{r2} \times i_{spr}\}.$$

Der dritte zur Charakterisierung der Hochschaltkennlinie erforderliche Punkt $P_{h3}$ liegt auf der Drehzahlachse, d.h. das übertragbare Drehmoment ist gleich Null. Die dazugehörige Drehzahl

$$\{n_{h3} = max [k_{h3} \times n_{h2}; n_{r3} \times i_{spr}\}.$$

Für die Bestimmung des unteren Drehzahlgrenzbereiches 2 sind ebenfalls wenigstens drei Punkte erforderlich, diese sind mit $P_{r1}$, $P_{r2}$ und $P_{r3}$ bezeichnet. Der Punkt $P_{r1}$ entspricht dabei dem Abknickpunkt der Vollastlinie bei konstantem Motormoment. Der Punkt $P_{r2}$ ergibt sich aus dem Schnittpunkt der Vollastlinie mit der Kennlinie für den spezifischen Kraftstoffverbrauch, welcher für die Festlegung des zweiten Punktes $P_{h2}$ verwendet wurde. Ist die Vollastlinie in diesem Bereich sehr niedriger Drehzahl nicht mehr verfügbar, so kann die Drehzahl $n_{r2}$ aus der Bedingung $n_{r2}$ = $k_{r2} \times n_{r1}$ ermittelt werden. Der dritte Punkt $P_{r3}$ ergibt sich aus der Fällung des Lotes von Punkt $P_{r2}$ auf die Drehzahlachsen. Die Werte $k_{h1}$, $k_{h2}$, $k_{h3}$, $k_{r1}$ und $k_{r2}$ werden anhand realer Motorkennfelder, beispielsweise durch Versuche derart ermittelt, daß diese für nahezu jeden eingesetzten Motor gültig sind.

Als zusätzliche Anforderung muß der durch die Grenzkurve festgelegte Bereich des weiteren zur Vermeidung von Gangoszillationen ein Drehzahlverhältnis größer als der maximale Gangsprung $i_{spr}$ aufweisen. Deshalb gilt:

$$n_{h3}/n_{r3} > i_{spr}.$$

Dies führt dann zu den obengenannten Bedingungen für $n_{h2}$ und $n_{h3}$.
Durch die Vorgabe dieser Bedingungen sollten Gangoszillationen zuverlässig vermieden werden und der so definierte Arbeitsbereich des Motors zu einem einwandfreien Schaltverhalten führen, das auch die Belange verbrauchsgünstigen Betriebes miteinbezieht.

Bei den in der Figur 2 dargestellten Kennlinien der Grenzdrehzahlen 1 und 2 handelt es sich um die Grundgrenzdrehzahlen, welche für minimalste Anforderungen aus dem Motorkennfeld generiert werden.

Ein weiteres zusätzliches zu berücksichtigendes Problem stellt bei Verwendung eines hydrodynamischen Wandlers mit Überbrückungskupplung dar. Neben der Schaltung von Gängen muß nämlich bei einem Wandler auch die Überbrückungskupplung geöffnet und geschlossen werden. Typisch für einen Wandler sind dabei Betriebspunkte, die auf einer Parabelschar liegen. Stellt man jedoch diese Parabeln im Motorkennfeld mit dem Parameter-Drehzahlverhältnis (Quotient aus Turbinendrehzahl $n_T$ und Motordrehzahl $n_{mot}$) dar, so läßt sich das Betriebsverhalten sehr gut analysieren.

Das Turbinenrad selbst ist starr mit dem mechanischen Teil des Planetengetriebes und dem Abtrieb verbunden, womit die Turbinendrehzahl proportional der Fahrgeschwindigkeit ist. Steht das Fahrzeug, so ist auch die Turbinendrehzahl und damit das Drehzahlverhältnis gleich Null. Die Wandlerparabelschar wird bei einem Anfahrvorgang mit Wandler beispielsweise bei Vollast in der Reihenfolge der Schnittpunkte mit der Vollastlinie durchfahren. Mit zunehmender Fahrgeschwindigkeit wandert dann der Betriebspunkt nach rechts in Richtung höherer Drehzahl und damit auch in Richtung eines ungünstigeren spezifischen Verbrauchs. Als Gegenmaßnahme führt das Schließen der Wandlerüberbrückungskupplung zu einer erheblichen Motordrückung, so daß dadurch der spezifische Verbrauch verbessert wird. Allerdings wird dann auch schlagartig die Motorleistung reduziert. Daher wird erfindungsgemäß vorgesehen, daß auch das Öffnen und Schließen der Wandlerüberbrückungskupplung nach den gleichen Kriterien wie bei einem Gangwechsel erfolgen soll. Formal könnte dies dabei derart realisiert werden, daß beispielsweise ein 6-Gang-Getriebe mit den beiden ersten Gängen, die im Wandlerbetrieb gefahren werden können, dieses als 8-Stufen-Getriebe aufgefaßt wird. Die erste Getriebestufe entspricht dann dem ersten Gang inklusive Wandlerbetrieb, die zweite Stufe entspricht dem ersten mechanischen Gang mit Überbrückungskupplung etc.

Bei einer Hochschaltung von der ersten Gangstufe in die zweite Gangstufe wird dann nicht ein rein mechanischer Gang geschaltet, sondern es wird die Überbrückungskupplung geschlossen, bei der Rückschaltung von der zweiten in die erste Stufe wird die Überbrückskupplung geöffnet.

Vorzugsweise werden Nebenbedingungen im Wandlerbetrieb in zweckmäßiger Art und Weise vereinbart, da Anfahrvorgänge zu einem instationären Motorverhalten führen können, so daß eine zu frühzeitige Wandlerüberbrük-

kung möglicherweise problematisch ist, da das stationäre Motordrehmoment noch gar nicht verfügbar ist. Aus diesem Grund kann als Zusatzbedingung vereinbart werden, daß das Schließen der Wandlerkupplung nur dann erfolgen soll, wenn eine bestimmte Motorleistung $P_{mot,min}$ überschritten ist. Als erster Vorschlag für die Festlegung für die bestimmte Motorleistung wird die Leistung im Punkt $b_{e,min}$ vorgeschlagen.

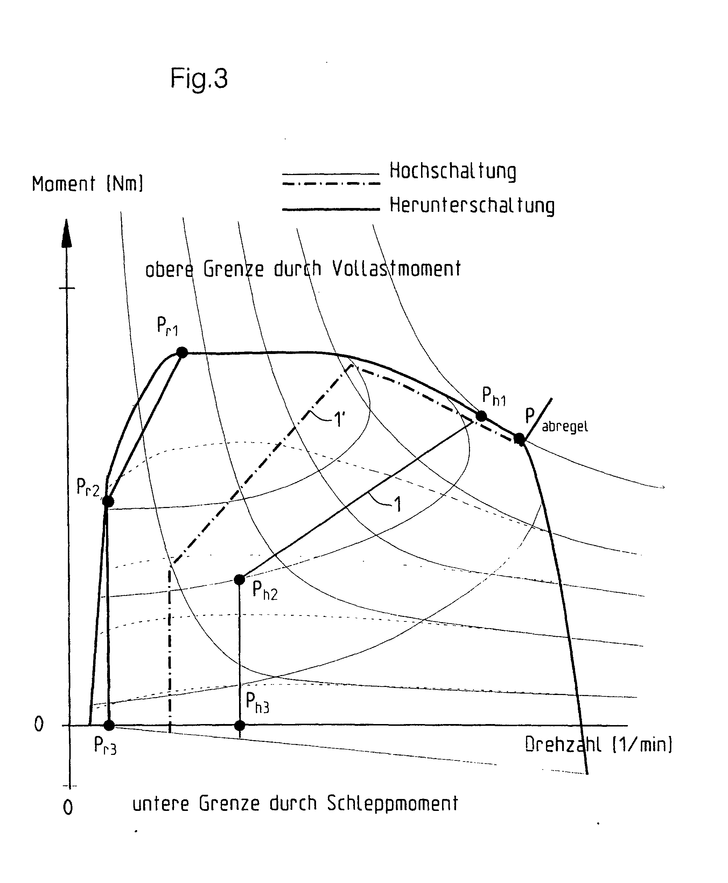

Zusätzliche Eingrenzungen des Arbeitsbereiches der Verbrennungskraftmaschine können vorteilhafte Eigenschaften bedingen, beispielsweise eine Verbesserung des Verbrauchsverhaltens wie in der Figur 3 dargestellt. Figur 3 verdeutlicht dabei eine Beschränkung des Arbeitsbereiches der Verbrennungskraftmaschine im Hinblick auf verbrauchsgünstiges Verhalten in Abhängigkeit von Fahrdynamik und Fahrerwunsch. Die Kennlinie für die obere Grenzdrehzahl ist für diesen Fall strichpunktiert dargestellt und mit 1' bezeichnet und gegenüber der in Fig. 2 wiedergegebenen Grundgrenzdrehzahlkennlinie 1, welche in dieser Figur mittels einer dünnen Linie zu Vergleichszwecken eingetragen ist, zu geringeren Drehzahlen hin verschoben. Diese Erweiterung setzt jedoch zusätzliche Sensoren zur Erfassung bestimmter Größen voraus. Fallen diese aus, bleibt jedoch die in der Figur 2 beschriebene Funktionsfähigkeit, d.h. der breite Arbeitsbereich des Motors erhalten.

Die Eingrenzung des Arbeitsbereiches kann beispielsweise in Abhängigkeit von folgenden Größen erfolgen:

- Gaspedalgeschwindigkeit und/oder
- Fahrzeugmasse und/oder
- Fahrbahnsteigung.

Bei hoher Gaspedalgeschwindigkeit d.h. Wunsch nach mehr Leistung, soll dabei der zulässige Drehzahlbereich zu höheren zulässigen Drehzahlen gegenüber dem in Figur 2 verdeutlichten Arbeitsbereich hin verschoben werden. Dadurch wird es möglich, daß dem Fahrer, der durch seine Gaspedalbewegungen Ungeduld gezeigt hat, eine erhöhte Leistungsbereitschaft zur Verfügung gestellt wird, indem die unteren Motordrehzahlen nicht mehr genutzt werden können.

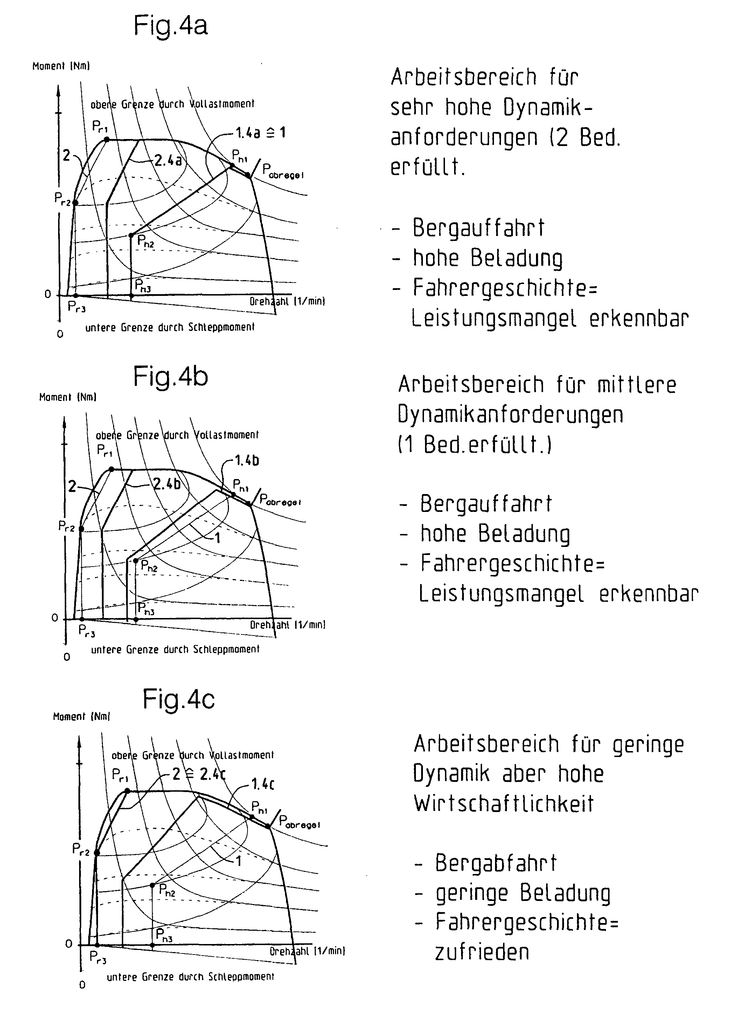

Als ein weiteres Kriterium kann die Fahrzeugmasse eine Verschiebung des Arbeitsbereiches bewirken. Ein leeres Fahrzeug arbeitet mit nach links verschobenem Arbeitsbereich, ist das Fahrzeug voll wird der Arbeitsbereich im Drehmoment-/Drehzahlkennfeld des Motors nach rechts verschoben. Ähnliches wie für die Fahrzeugmasse gilt auch für die Fahrbahnsteigung. Eine Zusammenstellung verschiedener Zustände ist in den Figuren 4a bis 4c verdeutlicht. Dabei verdeutlicht Figur 4a einen Arbeitsbereich für hohe Dynamikanforderungen, wie diese beispielsweise bei Fahrten an Steigungen mit hohen Beladungen und eines Fahrerwunsches nach mehr Leistung charakterisiert sind. Die Kennlinie für den unteren Drehzahlgrenzbereich 2.4a ist zu höheren Motordrehzahlen hin verschoben. Die Kennlinie für den oberen Drehzahlgrenzbereich 1.4a entspricht der Kennlinie des oberen Grundgrenzdrehzahlbereiches 1. Die Figur 4b verdeutlicht den sich ergebenden Arbeitsbereich für mittlere Dynamikanforderungen, beispielsweise Fahrt an Steigungen sowie einer hohen Beladungsdichte. Die Kennlinie für den unteren Drehzahlgrenzbereich 2.4b ist zu höheren Motordrehzahlen hin verschoben. Die Kennlinie für den oberen Drehzahlgrenzbereich 1.4b ist zu geringeren Drehzahlen gegenüber dem Grunddrehzahlgrenzbereich 1 hin verschoben. Demgegenüber verdeutlicht Figur 4c den Arbeitsbereich für geringe Dynamik aber hohe Wirtschaftlichkeit. Die Verlagerung des Arbeitsbereiches erfolgt hier in Richtung der Vollastkennlinie vor dem Abknickpunkt durch Verlagerung der Kennlinie für den oberen Grenzdrehzahlbereich zu geringeren Antriebsdrehzahlen entsprechend der Kennlinie 1.4c

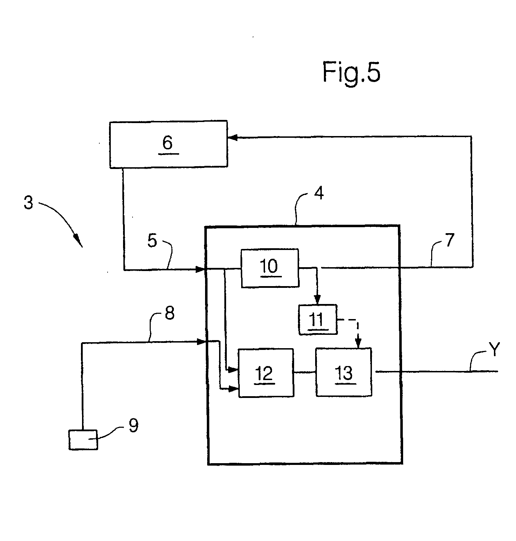

Die Figur 5 verdeutlicht in schematisch vereinfachter Darstellung anhand eines Blockschaltbildes den Aufbau einer bevorzugt einsetzbaren Getriebesteuervorrichtung zur Durchführung des erfindungsgemäßen Verfahrens für den Einsatz in Automatikgetrieben in Fahrzeugen mit integriertem CAN-Bus.

Die Getriebesteuerung 3 umfaßt eine Steuervorrichtung 4. Diese weist wenigstens zwei Eingänge und zwei Ausgänge auf. Ein erster Eingang 5 ist dabei mit der Kommunikationsschnittstelle der Steuergeräte im Fahrzeug, dem CAN-Bus 6 koppelbar, ebenfalls ein erster Ausgang 7. Über den Eingang 5 kann die Steuervorrichtung 4 auf das im CAN-Bus 6 hinterlegte Motorkennfeld zurückgreifen. Die Getriebesteuerung generiert dann bei erstmaliger Inbetriebnahme des Antriebsstranges wenigstens die Grundgrenzdrehzahlen im Motorkennfeld und grenzt damit den Arbeitsbereich für die Zusammenarbeit Motor-Getriebe ein. Für den Fall, daß weitere vorteilhafte Eigenschaften der vorzunehmenden Schaltvorgänge (beispielsweise Vornahme von Schaltungen nur im verbrauchsgünstigsten Bereich) erzielt werden sollen, kann dies ebenfalls bei der Generierung der Grenzdrehzahlbereiche mit Berücksichtigung finden. Der entsprechende Algorithmus zur automatischen Generierung des Grundgrenzbereiches bzw. der möglichen Einschränkungen dieses Bereiches ist Bestandteil der Getriebesteuerung und wird mit Auslieferung des Getriebes und der zugehörigen Steuervorrichtung mit angeboten. Dies kann über eine Berechnungseinrichtung 10 erfolgen. Das derart hinsichtlich des Arbeitsbereiches eingegrenzte Motorkennfeld kann dann in einer Speichereinheit 11 der Getriebsteuerung und/oder im CAN-Bus 6 hinterlegt werden. Desweiteren ist in der Getriebesteuerung der Algorithmus für die Entscheidung zur Vornahme und Wahl der Art des zu realisierenden Schaltvorganges hinterlegt, welcher fortlaufend abgearbeitet wird. Die entsprechenden zu berücksichtigenden Eingangsgrößen werden, wie bereits ausgeführt zum Großteil über den CAN-Bus 6 entnommen bzw. der Getriebsteuerung über entsprechende Kopplungen mit den dazu erforderlichen Erfassungseinrichtungen zugeführt. Dazu ist beispielsweise ein weiterer zweiter Eingang 8 mit einer Einrichtung 9 zur Erfassung einer, die Istdrehzahl der Getriebeausgangswelle wenigstens mittelbar charakterisierenden Größe gekoppelt. Die Steuervorrichtung 4 umfaßt desweiteren wenigstens eine Berechnungseinrichtung 12, welche die hypothetisch erzielbaren Anschlußdrehzahlen im einzulegenden Zielgang und/oder dem noch aktuellen Gang bei nicht erfolgender Schaltung aus den Eingangsgrößen ermittelt. Die Berechnungseinrichtung ist mit einer Vergleichseinrichtung 13 gekoppelt, welcher wenigstens die berechneten Größen und die Grenzdrehzahlen zur Verarbeitung zuführbar sind. Entsprechend des Ergebnisses des Vergleiches wird wenigstens eine Steuergröße Y zur Ansteuerung der zum Gangwechsel zu betätigenden Steiglieder erzeugt und an wenigstens einem weiteren Ausgang 14 ausgegeben. Der Gangwechsel wird vollzogen oder nicht.

Verwendete Formelzeichen:

| $a$ | Längsbeschleunigung |
|---|---|
| $b\_e$ | effektiver spez. Kraftstoffverbrauch |
| $B$ | Kraftstoffverbrauch |
| $h$ | geodätische Höhe |
| $k_{hx}$ | Multiplikator für den Punkt x zum Hochschalten |
| $k_{rx}$ | Multiplikator für den Punkt x zum Herunterschalten |
| $Lg$ | Lastgeberstellung |
| $p$ | Luftdruck |
| $P\_mot$ | Motorleistung |
| $Ped$ | Fahrpedalstellung |
| $Ped'$ | Geschwindigkeit der Änderung der Fahrpedalstellung |
| $Ped\_br$ | Bremspedalstellung |
| $n_{abregel}$ | Drehzahl, bei der das Abregeln beginnt |
| $n_{min}$ | untere Grenzdrehzahl |
| $n_{hx}$ | Hochschaltdrehzahl im Punkt x |
| $n_{rx}$ | Herunterschaltdrehzahl im Punkt x |
| $n\_mot$ | Motordrehzahl |
| $n\_mot'$ | Motordrehzahlbeschleunigung |
| $n\_mot\_pr\_h$ | prognostizierte Motordrehzahl für den Zeitpunkt $t_0+t_{Schalt}$ in der Gangstufe g+1 nach der Hochschaltung vom Gang g |
| $n\_mot\_pr$ | prognostizierte Motordrehzahl für den Zeitpunkt $t_0+t_{Schalt}$ in der Gangstufe g, wenn keine Schaltung vorgenommen wird |
| $n\_ab$ | Abtriebsdrehzahl am Getriebeausgang |
| $n\_ab'$ | Abtriebsdrehzahlbeschleunigung am Getriebeausgang |
| $M\_mot$ | Motordrehmoment |
| $v$ | Fahrgeschwindigkeit |
| $psi$ | Gierwinkel |
| $Psi\_Punkt$ | Gierwinkelgeschwindigkeit |
| $r_{dyn}$ | dynamischer Rollradius |
| $t_0$ | aktueller Zeitpunkt |
| $t_{Schalt}$ | Schaltdauer |
| $i_{Achse}$ | Achsübersetzung |
| $i_{spr}$ | max. Verhältnis der Übersetzung zweier aufeinander folgender Gänge |

**Patentansprüche**

**1.** Verfahren zur Steuerung von Schaltvorgängen in Automatikgetrieben mit zuordenbarer Steuervorrichtung für den Einsatz in Antriebssträngen von Fahrzeugen mit wenigstens einem Antriebsmotor, insbesondere in Form einer Verbrennungskraftmaschine.

1.1 in einem ersten Verfahrensschritt werden die Istwerte bestimmter fahrdynamischer Größen für einen bestimmten Zeitpunkt $t_0$ erfaßt oder berechnet;
1.2 in einem zweiten Verfahrensscnritt werden aus den Istwerten eine theoretisch erzeibare Anschlußdrehzahl

der Antriebsmaschine, insbesondere der Verbrennungskraftmaschine n_mot_pr_h im Zielgang $g_{ziel} = g_{akt} + n$ mit $n \geq 1$oder n_mot_pr im aktuell eingelegten Gang $g_{akt}$, für jeden Zeitschritt $t=t_0 + t_{schalt}$ ermittelt;

1.3 in einem dritten Verfahrensschritt werden die ermittelten Anschlußdrehzahlen mit in einem Kennfeld des Antriebsmotors vorgebbaren Grenzdrehzahlen verglichen, wobei in Abhängigkeit des Vergleichsergebnisses kein oder ein Hoch- oder Herunterschaltvorgang durch Ansteuerung der zur Realisierung eines Gangwechsels betätigbaren Stellglieder eingeleitet wird, **gekennzeichnet durch** die folgenden Merkmale:

1.4 als fahrdynamischen Größen im ersten Verfahrensschritt werden wenigstens die nachfolgend genannten Istgrößen zum Zeitpunkt $t_0$ ermittelt

- n_mot - Motordrehzahl
- n_ab - Ausgangsdrehzahl des Getriebes
- Ped - Fahrpedalstellung
- Ped_br - Bremspedalstellung
- eine, die Fahrgeschwindigkeit wenigstens mittelbar charakterisierende Größe, v oder $i_{achs}$, $r_{dynamisch}$ zusammen mit der Abtriebsdrehzahl n_ab und

1.5. bei welchem im dritten Verfahrensschritt unter der folgenden Bedingung

a) die ermittelte Anschlußdrehzahl n_mot_pr_h zum Zeitpunkt $t = t_0+t_{Schalt}$ im Zielgang $g_{ziel} = g_{akt} + n$ ist größer als die untere Grenzdrehzahl oder
b) die ermittelte Anschlußdrehzahl n_mot_pr zum Zeitpunkt $t = t_0+t_{Schalt}$ für den aktuell eingelegten Gang $g_{akt}$ ist größer als die obere Grenzdrehzahl;

ein Hochschaltvorgang und unter der Bedingung
die ermittelte Anschlußdrehzahl n_mot_pr zum Zeitpunkt $t = t_0+t_{Schalt}$ für den aktuell eingelegten Gang $g_{akt}$ ist kleiner als die untere Grenzdrehzahl
ein Herunterschaltvorgang eingeleitet wird.

2. Verfahren nach Anspruch 1, **dadurch gekennzeichnet, daß** die Erfassung oder Ermittlung der Istwerte der fahrdynamischen Größen, die Ermittlung der theoretisch erzielbaren Anschlußdrehzahlen der Antriebsmaschine, insbesondere der Verbrennungskraftmaschine n_mot_pr_h im Zielgang $g_{ziel} = g_{akt} + n$ mit $n \geq 1$oder n_mot_pr im aktuell eingelegten Gang $g_{akt}$ und der Vergleich dieser mit den vorgebbaren Grenzdrehzahlen im Kennfeld des Antriebsmotors fortlaufend erfolgen.

3. Verfahren nach einem der Ansprüche 1 bis 4, **gekennzeichnet durch** die folgenden Merkmale:

3.1 die Kennlinien für die Grenzdrehzahlen im Kennfeld des Antriebsmotors werden automatisch aus dem Motorkennfeld für wenigstens jeweils drei Koordinaten generiert:
3.2 die einzelnen Koordinaten für die Kennlinie der oberen Grenzdrehzahl werden wie folgt festgelegt:

- $P_{h1}$ = (Drehzahl $n_{h1} = k_{h1} * n_{abregel}$; M = Vollastlinie)
- $P_{h2}$ = ($n_{r2}$ = max {$k_{h2}$ x ($n_{abregel}$ - $n_{min}$) + $n_{min}$; $n_{r2}$ x $i_{spr}$}; M ergibt sich **durch** den Schnittpunkt mit der Linie eines bestimmten spezifischen Kraftstoffverbrauches $b_e$, beispielsweise $b_e$ = 230 g/(kWh))
- $P_{h3}$ = ({$n_{h3}$ = max [$k_{h3}$ x $n_{h2}$; $n_{r3}$ x $i_{spr}$}; M=0), wobei die Faktoren $k_{h1}$, $k_{h2}$, $k_{h3}$ und $k_{r1}$ statistisch festgelegt werden;

die einzelnen Koordinaten für die Kennlinie der unteren Grenzdrehzahl
3.3 werden wie folgt festgelegt:

- $P_{r1}$ entspricht dem Abknickpunkt der Vollastlinie bei konstantem Motormoment
- $P_{r2}$ ergibt sich aus dem Schnittpunkt der Votlastlinie mit der Kennlinie für den spezifischen Kraftstoffverbrauch, welcher für die Festlegung des zweiten Punktes $P_{h2}$ verwendet wurde oder dieser wird aus der Beziehung $n_{r2} = k_{r2}$ x $n_{r1}$ ermittelt.
- $P_{r3}$ ergibt sich aus der Fällung des Lotes von Punkt $P_{r2}$ auf die Drehzahlachse.

4. Verfahren nach Anspruch 3, **dadurch gekennzeichnet, daß** die Kennlinien für die obere und/oder untere Grenzdrehzahl durch die Berücckichtigung wenigstens einer der nachfolgend genannten Größen Gaspedalgeschwindigkeit und/oder Fahrzeugmasse und/oder Fahrbahnsteigung modifiziert werden.

5. Verfahren nach einem der Ansprüche 1 bis 4 für den Einsatz in Antriebssträngen von Fahrzeugen mit integriertem CAN-Bus oder einer anderen Kommunkationsschnittstelle, welcher mit dem Automatgetriebe gekoppelt ist, **gekennzeichnet durch** die folgenden Merkmale:

> 5.1 bei welchem eine Vielzahl der erforderlichen fahrdynamischen Größen der Steuervorrichtung des Automatgetriebes über den CAN-Bus zuführbar sind;
> 5.2 bei welchem die Kenndaten des Kennfeldes des Antriebsmotors der Steuervorrichtung des Automatgetriebes über den CAN-Bus zuführbar sind.

6. Verfahren nach einem der Ansprüche 1 bis 5, **dadurch gekennzeichnet, daß** die theoretisch erzielbare Anschlußdrehzahl der Antriebsmaschine, insbesondere der Verbrennungskraftmaschine n_mot_pr_h im Zelgang $g_{ziel} = g_{akt} + n$ mit $n \geq 1$ nach der Gleichung

$$n\_mot\_pr\_h(t_0 + t_{Schalt}) = (n\_ab'(t_0) \times t_{Schalt} + n\_ab(t_0)) \times i(g+1) + f\_korr$$

ermittelt wird.

7. Verfahren nach Anspruch 6, **dadurch gekennzeichnet, daß** der Korrekturwert f_korr für jede durchgeführte Schaltung aus der Differenz zwischen der prognostizierten und der tatsächlich erreichten Anschlußdrehzahl ermittelt und in einer Erfahrungstabelle abgespeichert wird.

8. Verfahren nach Anspruch 7, **dadurch gekennzeichnet, daß** in der Erfahrungstabelle zusätzlich die Bedingungen, unter denen der Schaltvorgang vorgenommen wurde, charakterisierende Größen abspeicherbar sind.

9. Steuervorrichtung für Automatgetriebe in Antriebssträngen von Fahrzeugen mit einem Antriebsmotor

> 9.1 mit wenigstens zwei Eingängen und einem Ausgang zur Ausgabe einer Steuergröße zur wenigstens mittelbaren Ansteuerung eines zur Realisierung eines Gangwechsels in einem Antriebsstrang eines Automatgetriebes betätigbaren Stellgliedes;
> 9.2 die Eingänge sind jeweils mit Einrichtungen zur Erfassung fahrdynamischer Größen gekoppelt;
> 9.3 mit einer ersten Berechnungseinrichtung zur Festlegung der Grenzdrehzahlen für das Kennfeld des Antriebsmotors;
> 9.4 mit einer weiteren zweiten Berechnungseinrichtung zur Berechnung der hypothetisch erzielbaren Anschlußdrehzahlen im einzulegenden Zielgang und/oder dem noch aktuellen Gang bei nicht erfolgender Schaltung aus den über die Eingänge zugeführten fahrdynamischen Größen;
> 9.5 mit einer, mit der zweiten Berechnungseinrichtung gekoppelten Vergleichseinrichtung, welcher wenigstens die berechneten Anschlußdrehzahlen und desweiteren Grenzdrehzahlen zur Verarbeitung zuführbar sind und die wenigstens mittelbar mit dem Ausgang der Steuervorrichtung verbunden ist.

10. Steuervorrichtung nach Anspruch 9 für den Einsatz in Fahrzeugen mit zusätzlich integriertem CAN-Bus, **gekennzeichnet durch** folgende Merkmale:

> 10.1 der erste Eingang ist mit dem CAN-Bus gekoppelt;
> 10.2 der zweite Eingang ist mit einer Einrichtung zur Erfassung der Ausgangsdrehzahl des Getriebes gekoppelt;
> 10.3 mit einem zweiten Ausgang, welcher mit dem CAN-Bus gekoppelt ist.

## Claims

1. Method for controlling gear shifts in automatic transmissions with an allocatable control device for use in drive trains of vehicles with at least one drive motor, in particular in the form of an internal-combustion engine,

> 1.1 in a first process step the actual values of certain travel-dynamic variables for a certain instant $t_0$ are detected or calculated;
> 1.2 in a second process step, from the actual values there is determined a theoretically achievable connection speed of the drive motor, in particular of the internal-combustion engine, n_mot_pr_h in the target gear $g_{target}$

$= g_{current} + n$ with $n \geq 1$, or n_mot_pr in the currently engaged gear $g_{current}$, for each time step $t = t_0 + t_{shift}$;

1.3 in a third process step the ascertained connection speeds are compared with limit speeds that can be stipulated in a characteristic diagram of the drive motor, no gear shift or a change-up or change-down gear shift being initiated by triggering of the actuators actuable for carrying out a gear shift as a function of the comparison results, **characterised by** the following features:

1.4 at least the following actual variables for the instant $t_0$

- n_mot - motor speed
- n_ab - output speed of the transmission
- Ped - gas pedal position
- Ped_br - brake pedal position;
- a variable v or $i_{axial}$, $r_{dynamic}$, together with the output speed n_ab at least indirectly characterising the driving speed

being ascertained as the travel-dynamic variables in the first process step and

1.5 in which in the third process step under the following condition

a) the ascertained connection speed n_mot_pr_h at the instant $t = t_0 + t_{shift}$ in the target gear $g_{target} = g_{current} + n$ is greater than the lower limit speed or

b) the ascertained connection speed n_mot_pr at the instant $t = t_0 + t_{shift}$ for the currently engaged gear $g_{current}$ is greater than the upper limit speed,

a change-up gear shift is initiated; and, under the condition

that the ascertained connection speed n_mot_pr for the instant $t = t_0 + t_{shift}$ for the currently engaged gear $g_{current}$ is less than the lower limit speed,

a change-down gear shift is initiated.

2. Method according to claim 1, **characterised in that** the detection or determination of the actual values of the travel-dynamic variables, the determination of the theoretically attainable connection speeds of the drive motor, in particular of the internal-combustion engine, n_mot_pr_h in the target gear $g_{target} = g_{current} + n$ with $n \geq 1$, or n_mot_pr in the currently engaged gear $g_{current}$, and the comparison of the latter with the limit speeds that can be stipulated in the characteristic diagram of the drive motor, occurs continuously.

3. Method according to any of claims 1 to 4, **characterised by** the following features:

3.1 the characteristic lines for the limit speeds in the characteristic diagram of the drive motor are automatically generated from the motor characteristic diagram for at least three respective coordinates:

3.2 the individual coordinates for the characteristic line of the upper limit speed are established as follows:

- $P_{h1}$ = (speed $n_{h1} = k_{h1} * n_{regulated}$; M = full load line)
- $P_{h2}$ = ($n_{r2}$ = max {$k_{h2}$ x ($n_{regulated}$ - $n_{min}$) + $n_{min}$; $n_{r2}$ x $i_{spr}$}; M results from the intersection point with the line of a certain specific fuel consumption $b_e$, for example $b_e$ = 230 g/(kWh))
- $P_{h3}$=({$n_{h3}$ = max {$k_{h3}$ x $n_{n2}$; $n_{r3}$ x $i_{spr}$}; M = 0), wherein the factors $k_{h1}$, $k_{n2}$, $k_{h3}$ and $k_{r1}$ are established statistically;

3.3 the individual coordinates for the characteristic line of the lower speed limit are established as follows:

- $P_{r1}$ corresponds to the bend-off point of the full load line with constant motor torque

- $P_{r2}$ results from the intersection point of the full load line with the characteristic line for the specific fuel consumption which was used to establish the second point $P_{h2}$, or this is determined from the relation $n_{r2} = k_{r2}$ x $n_{r1}$
- $P_{r3}$ results from the dropping of the vertical from point $P_{r2}$ onto the speed axis.

4. Method according to claim 3, **characterised in that** the characteristic lines for the upper and/or lower limit speeds are modified by taking into account at least one of the following variables: gas pedal speed, and/or vehicle mass, and/or roadway gradient.

5. Method according to any of claims 1 to 4 for use in drive trains of vehicles with integrated CAN-Bus or another communications interface, which is coupled to the automatic transmission, **characterised by** the following features:

> 5.1 a large number of the required travel-dynamic variables can be fed via the CAN-bus to the control device of the automatic transmission;
> 5.2 characteristic data of a characteristic diagram of the drive motor can be fed via the CAN-Bus to the control device of the automatic transmission.

**6.** Method according to any of claims 1 to 5, **characterised in that** the theoretically achievable connection speed of the drive motor, in particular of the internal-combustion engine, n_mot_pr_h in the target gear $g_{target} = g_{current} + n$ with $n \geq 1$, is determined according to the equation

$$n\_mot\_pr\_h(t_0 + t_{shift}) = (n\_ab'(t_0) \times t_{shift} + n\_ab(t_0)) \times i(g+1) +$$

$$f\_korr.$$

**7.** Method according to claim 6, **characterised in that** the correction value f_korr for each executed shift is determined from the difference between the theoretically achievable and the actually achieved connection speed and is stored in an experiment table.

**8.** Method according to claim 7, **characterised in that** in the experiment table characteristic variables can be stored in addition to the conditions under which the gear shift was performed.

**9.** Control device for automatic transmissions in drive trains of vehicles with a drive motor,

> 9.1 comprising at least two inputs and one output for issuing a control variable for the at least indirect triggering of an actuator actuable for carrying out a gear shift in a drive train of an automatic transmission;
> 9.2 the inputs are each coupled to arrangements for detecting travel-dynamic variables;
> 9.3 a first computing arrangement for establishing limit speeds for the characteristic diagram of the drive motor;
> 9.4 a further second computing arrangement for computing from the travel-dynamic variables fed over the inputs hypothetically achievable connection speeds in the target gear to be engaged, and/or in the current gear, in the case of a non-occurring shift;
> 9.5 a comparator arrangement coupled to the second computing arrangement, to which can be fed at least the computed connection speeds and furthermore limit speeds for processing and the comparator arrangement is connected at least indirectly to the output of the control device.

**10.** Control device according to claim 9 for use in vehicles with an additionally integrated CAN-BUS, **characterised by** the following features:

> 10.1 the first input is coupled to the CAN-Bus;
> 10.2 the second input is coupled to an arrangement for detecting the output speed of the transmission;
> 10.3 the control device further comprises a second output, which is coupled to the CAN-Bus.

**Revendications**

**1.** Procédé de commande des processus de commutation dans des boîtes de vitesses automatiques avec un dispositif de commande pouvant y être affecté, pour utilisation dans des lignes de transmission de véhicules comprenant au moins un moteur d'entraînement, en particulier sous forme d'un moteur à combustion interne,

> 1.1 dans une première étape du procédé, on saisit ou calcule les valeurs réelles de grandeurs déterminées de dynamique du mouvement du véhicule pour une période de temps déterminée $t_0$ ;
> 1.2 dans une deuxième étape du procédé, on détermine à partir des valeurs réelles, une vitesse de rotation de la machine d'entraînement, en particulier du moteur à combustion interne, qui peut être théoriquement atteinte, n_mot_pr_h dans le rapport de vitesse cible $g_{cib} = g_{act} + n$ avec $n \geq 1$ ou n_mot_pr à la vitesse réelle enclenchée $g_{act}$, pour chaque période de temps $t = t_0 + t_{schalt}$ ;
> 1.3 dans une troisième étape du procédé, les vitesses de rotation déterminées sont comparées à des vitesses limites préréglables dans un champ de caractéristiques du moteur d'entraînement, un processus de commutation vers le haut ou vers le bas, ou pas de processus, du tout étant déclenché en fonction du résultat de la comparaison, par mise en oeuvre de la commande des organes de réglage pouvant être activés pour réaliser un changement de vitesse,

**caractérisé par** les dispositions suivantes :

1.4 en tant que grandeurs de dynamique du mouvement du véhicule, on détermine dans la première étape du procédé, au moins les grandeurs réelles énoncées ci-après au temps $t_0$ :

- n_mot - vitesse de rotation du moteur
- n_ab - vitesse de rotation de sortie de la boîte de vitesses
- Ped - position de la pédale d'accélérateur
- Ped_br - position de la pédale de frein
- une grandeur caractérisant au moins indirectement la vitesse de marche v ou iaxe, $r_{dyn}$ en même temps que la vitesse de rotation de sortie n_ab, et

1.5 où, dans la troisième étape du procédé, un processus de commutation vers le haut est déclenché à la condition suivante

a) que la vitesse de rotation déterminée n_mot_pr_h au temps $t = t_0 + t_{con}$ dans le rapport de vitesse cible $g_{cib} = g_{act} + n$ soit supérieure à la vitesse de rotation limite inférieure ou

b) que la vitesse de rotation déterminée n_mot_pr au temps $t = t_0 + t_{con}$ pour la vitesse réelle enclenchée $g_{act}$ soit supérieure à la vitesse de rotation limite supérieure ;

et un processus de commutation vers le bas est déclenché, à la condition

que la vitesse de rotation d'entrée déterminée n_mot_pr au temps $t = t_0 + tcon$ pour la vitesse réelle enclenchée soit inférieure à la vitesse de rotation limite inférieure.

2. Procédé selon la revendication 1, **caractérisé en ce que** la saisie ou la détermination des valeurs réelles des grandeurs de dynamique du mouvement du véhicule, la détermination des vitesses de rotation de la machine d'entraînement, en particulier du moteur à combustion interne, qui peuvent être théoriquement atteintes, n_mot_pr dans le rapport de vitesse cible $g_{cib} = g_{act} + n$ avec $n \geq 1$ ou n_mot_pr à la vitesse réelle enclenchée $g_{act}$ et la comparaison de celles-ci avec les vitesses de rotation limites préréglables dans le champ de caractéristiques du moteur d'entraînement sont réalisées de manière continue.

3. Procédé selon l'une des revendications 1 à 2, **caractérisé par** les dispositions suivantes :

3.1 les courbes caractéristiques pour les vitesses de rotation limites dans le champ de caractéristiques du moteur d'entraînement sont générées automatiquement à partir du champ de caractéristiques du moteur pour au moins trois coordonnées respectives :

3.2 les coordonnées respectives pour la courbe caractéristique de la vitesse de rotation limite supérieure sont déterminées comme suit :

- $P_{h1}$ = (vitesse de rotation $n_{n1} = k_{n1} * n_{abregel}$ ; M = ligne de pleine charge)
- $P_{h2}$ = ($n_{r2}$ = max $\{k_{h2} \times (n_{abregel} - n_{min}) + n_{min}$ ; $n_{r2} \times i_{spr}\}$ ; M est obtenu au point d'intersection avec la courbe d'une consommation de carburant déterminée spécifique $b_e$, par exemple $b_e$ = 230 g/(kWh))
- $P_{h3}$ = ($n_{h3}$ = max $\{kh_3 \times n_{h2}$ ; $n_{r3}. \times i_{spr}\}$ ; M = 0), les facteurs $k_{h1}$, $k_{h2}$, $k_{h3}$ et $k_{r1}$ étant déterminés statistiquement ;

les coordonnées spécifiques pour la courbe caractéristique de la vitesse de rotation limite sont déterminées de la manière suivante :

- $P_{r1}$ correspond au point de rupture de la ligne de pleine charge pour un couple moteur constant
- $P_{r2}$ est obtenu au point d'intersection de la ligne de pleine charge et de la courbe caractéristique de la consommation spécifique de carburant, lequel a été utilisé pour déterminer le deuxième point $P_{h2}$ ou bien ce dernier est déterminé par la relation $n_{r2} = k_{r2} \times n_{r1}$ ;
- $P_{r3}$ résulte de l'abaissement de la perpendiculaire du point $P_{r2}$ sur l'axe des vitesses.

4. Procédé selon la revendication 3, **caractérisé en ce que** les courbes caractéristiques pour les vitesses de rotation limite supérieures et/ou inférieures sont modifiées en prenant en compte au moins l'une des grandeurs énoncées ci-après, à savoir la vitesse de la pédale d'accélérateur et/ou la masse du véhicule et/ou l'inclinaison de la chaussée.

**5.** Procédé selon l'une des revendications 1 à 4 pour utilisation dans des lignes de transmission de véhicules avec un CAN-bus intégré ou une autre interface de communication qui est couplé avec la boîte automatique, **caractérisé par** les dispositions suivantes :

> 5.1 dans lequel plusieurs des grandeurs nécessaires de dynamique du mouvement du véhicule peuvent être amenées au dispositif de commande de la boîte de vitesses automatiques par l'intermédiaire du CAN-bus ;
> 5.2 dans lequel les données caractéristiques du champ de caractéristiques du moteur d'entraînement peuvent être amenées au dispositif de commande de la boîte automatique par l'intermédiaire du CAN-bus.

**6.** Procédé selon l'une des revendications 1 à 5, **caractérisé en ce que** la vitesse de rotation de la machine d'entraînement, en particulier du moteur à combustion interne, pouvant être théoriquement obtenue, n_mot_pr_h, est déterminée dans le rapport de vitesse cible $g_{cib} = {}_{gact} + n$ avec $n \geq 1$ d'après l'équation

$$n\_mot\_pr\_h\ (t_0 + t_{con}) = (n\_ab'\ (t_0)\ x\ t_{con} +$$

$$n\_ab(t_0))\ x\ i\ (g + 1) + f\_corr.$$

**7.** Procédé selon la revendication 6, **caractérisé en ce que** la valeur de correction f_corr pour chaque commutation réalisée est déterminée par la différence entre la vitesse de rotation prédite et la vitesse effectivement atteinte et est enregistrée dans un tableau empirique.

**8.** Procédé selon la revendication 7, **caractérisé en ce que** dans le tableau empirique, on peut en outre enregistrer en tant que grandeurs caractérisantes, les conditions dans lesquelles le processus de commutation a été réalisé.

**9.** Dispositif de commande pour des boîtes automatiques dans des lignes de transmission de véhicules comportant un moteur d'entraînement

> 9.1 avec au moins deux entrées et une sortie pour fournir une grandeur de commande pour la mise en oeuvre au moins indirecte de la commande d'un organe de réglage actionnable permettant de réaliser un changement de vitesse dans une ligne de transmission d'une boîte automatique;
> 9.2 Les entrées sont respectivement couplées avec des dispositifs de saisie de grandeurs de dynamique du mouvement du véhicule ;
> 9.3 avec un premier dispositif de calcul destiné à déterminer les vitesses de rotation limites pour le champ de caractéristiques du moteur d'entraînement ;
> 9.4 avec un deuxième dispositif de calcul destiné à calculer, à partir des grandeurs de dynamique du mouvement du véhicule amenées par l'intermédiaire des entrées, les vitesses de rotation accessibles par hypothèse à la vitesse cible devant être enclenchée et/ou dans le rapport de vitesse encore actuel, alors que la commutation n'a pas été effectuée ;
> 9.5 avec un dispositif de comparaison couplé avec le deuxième dispositif de calcul, auquel on peut amener au moins les vitesses de rotation calculées et en outre les vitesses de rotation limite pour traitement, et qui est au moins indirectement relié à la sortie du dispositif de commande.

**10.** Dispositif de commande selon la revendication 9, pour utilisation dans des véhicules avec en outre un CAN-bus intégré, **caractérisé par** les dispositions suivantes :

> 10.1 la première entrée est couplée au CAN-bus ;
> 10.2 la deuxième entrée est couplée avec un dispositif de saisie de la vitesse de rotation de sortie de la transmission ;
> 10.3 avec une deuxième sortie qui est couplée au CAN-bus.

Fig.1

$t = t_o$

Messung bzw. Berechnung folgender fahrdyn. Größen:

$n\_mot(t_o), n\_ab'(t_o), n\_ab(t_o), Ped(t_o), Ped'(t_o)$

I

Prognose der Motordrehzahlen für $t = t_o + t schalt$:

für Gang g+1:

$n\_mot\_pr\_h(t_o + t_{schalt}) = f(n\_ab(t_o), n\_ab'(t_o), n\_mot(t_o), n\_mot'(t_o),...,)$

für Gang g:

$n\_mot\_pr(t_o + t_{schalt}) = f(n\_ab(t_o), n\_ab'(t_o), n\_mot(t_o), n\_mot'(t_o),...,)$

II

Hochschalten

Ist
$n\_mot\_pr\_h(t_o + t_{schalt}) > n\_mot\_untgrenze$
oder
$n\_mot\_pr(t_o + t_{schalt}) > n\_mot\_obgrenze$
?

III.1

ja

Ist
$n\_mot\_pr(t_o + t_{schalt}) < n\_mot\_untgrenze$
?

ja

Herunterschalten

III.2

$t = t_o + \Delta t$

Fahrtende

Ende

Fig.2

## Fig.3

Legend:
- — · — · — Hochschaltung
- ——— Herunterschaltung

Moment [Nm]

obere Grenze durch Vollastmoment

$P_{r1}$

$P_{h1}$

$P_{abregel}$

1'

$P_{r2}$

1

$P_{h2}$

$P_{h3}$

0

$P_{r3}$

Drehzahl [1/min]

0   untere Grenze durch Schleppmoment

## Fig.4a

Arbeitsbereich für
sehr hohe Dynamikanforderungen (2 Bed.
erfüllt.

- Bergauffahrt
- hohe Beladung
- Fahrergeschichte=
  Leistungsmangel erkennbar

## Fig.4b

Arbeitsbereich für mittlere
Dynamikanforderungen
(1 Bed.erfüllt.)

- Bergauffahrt
- hohe Beladung
- Fahrergeschichte=
  Leistungsmangel erkennbar

## Fig.4c

Arbeitsbereich für geringe
Dynamik aber hohe
Wirtschaftlichkeit

- Bergabfahrt
- geringe Beladung
- Fahrergeschichte=
  zufrieden

## Fig.5